(19) Europäisches Patentamt
European Patent Office
Office européen des brevets

(11) EP 4 253 088 B1

(12) EUROPEAN PATENT SPECIFICATION

(45) Date of publication and mention of the grant of the patent:
**02.07.2025 Bulletin 2025/27**

(21) Application number: **23163552.5**

(22) Date of filing: **22.03.2023**

(51) International Patent Classification (IPC):
***B60C 9/18*** *(2006.01)* ***B60C 1/00*** *(2006.01)*
*B60C 9/00* *(2006.01)* *B60C 11/00* *(2006.01)*

(52) Cooperative Patent Classification (CPC):
**B60C 9/1821; B60C 1/0016;** B60C 2009/0014; B60C 2009/0092; B60C 2011/0025; B60C 2200/10

(54) **MOTORCYCLE TIRE**

MOTORRADREIFEN

PNEU DE MOTOCYCLETTE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.03.2022 JP 2022052535**
**25.10.2022 JP 2022170521**

(43) Date of publication of application:
**04.10.2023 Bulletin 2023/40**

(73) Proprietor: **Sumitomo Rubber Industries, Ltd.**
**Kobe-shi, Hyogo 651-0072 (JP)**

(72) Inventor: **INOUE, Manabu**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**JP-A- 2021 130 449** **JP-B2- 6 855 699**

Remarks:

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 253 088 B1

## Description

[TECHNICAL FIELD]

The present invention relates to a motorcycle tire (a tire for a two-wheeled motor vehicle), and more particularly to a motorcycle tire in which steel cords are used for belt layers. Such tires are generally known, see for instance JP 6 855699 B2 or JP 2021 130449 A.

[BACKGROUND ART]

As the performance of motorcycle (two-wheeled motor vehicle) improves, there is an increasing demand for improved performance such as steering stability for a motorcycle tire (hereinafter also simply referred to as "tire"). In order to meet such demands, in recent years, aramid cords with higher strength have been used for belt layers in place of nylon 66 (registered trademark) cords that have been conventionally used.

However, aramid cords are very expensive, and chemicals such as concentrated sulfuric acid, which have a negative impact on the environment, are used during their production. For this reason, along with the recent heightened awareness of the environment, there is a demand for cheaper and more environmentally friendly materials, and steel cords are being considered as such materials.

That is, steel cords are less expensive than aramid cords, and are materials that have a relatively small impact on environmental pollution, while having high modulus like aramid cords. Therefore, it is preferable if steel cords can be adopted as belt layer materials.

Accordingly, various techniques have been proposed that employ steel cords as belt layer materials (for example, Patent Documents 1 and 2).

[PRIOR ART DOCUMENTS]

[PATENT DOCUMENT]

[Patent Document 1] JP2014-172548 A
[Patent Document 2] JP 6863000 B

[SUMMARY OF INVENTION]

[PROBLEM TO BE SOLVED BY THE INVENTION]

However, steel cords have higher bending stiffness and compression stiffness than aramid cords, and have the property of being buckled when compressed forcibly. Of these, high bending stiffness may deform the ground contact shape of a motorcycle tire having a curved tread surface, resulting in deterioration of steering stability. In addition, the high compression stiffness may cause a buckling phenomenon in which a portion of the tire rises from the ground contact surface and undulates, particularly during high-speed turning, and may deteriorate steering stability. Therefore, there is room for improvement in improving steering stability during high-speed turning when steel cords are used as belt layer materials for motorcycle tires.

The present invention has been made in view of the above situation, and an object of the present invention is to provide a tire for a motorcycle that provides excellent steering stability during high-speed turning while using steel cords as a belt layer materials.

[MEANS FOR SOLVING THE PROBLEM]

The inventor of the present invention has earnestly studied in order to solve the above problems, and found that the above problems can be solved by the invention described below.

The present invention is a motorcycle tire comprising

a carcass extending from a tread portion to a bead core of a bead portion via a sidewall portion, and a belt layer arranged outside the carcass and inside the tread portion in the tire radial direction, wherein
the belt layer is a steel belt layer having steel cords;
the steel cord is a steel cord having an $m \times n$ configuration in which n strands, formed by twisting m steel filaments, are

twisted together in the same direction as the steel filaments, and the m is 1 or more and 3 or less, and n is 2 or more and 6 or less;
the diameter of the steel filament is 0.15 mm or more and 0.25 mm or less;
the rubber composition forming the tread portion is a rubber composition having a complex elastic modulus E* (MPa) of 5.0 MPa or more, measured under the conditions of 70°C, initial strain of 5%, dynamic strain rate of 1%, frequency of 10 Hz, and deformation mode: extension; and
the product (S × E*) of the total cross-sectional area S($mm^2$) of the steel filaments in the cross section of the steel cord and the complex elastic modulus E* (MPa) is 2.00 or less.

[THE EFFECT OF THE INVENTION]

According to this invention, a motor cycle tire which can obtain the excellent steering stability can be provided, using a steel cord for a belt layer material.

[BRIEF DESCRIPTION OF THE DRAWING]

FIG. 1 is a partial schematic cross-sectional view of a motorcycle tire according to the present invention.
FIG. 2 is a schematic perspective view showing an example of the configuration of belt layers in the present invention.
FIG. 3 is a schematic cross-sectional view showing one example of the configuration of a steel cord according to the present invention.
FIG. 4 is a diagram for explaining a measurement sample and a correction sample for compression stiffness values of steel cords.
FIG. 5 is a schematic side view for explaining a method of measuring the compression stiffness value of steel cords.
FIG. 6 is a diagram explaining a method of calculating a compression stiffness value of a steel cord.
FIG. 7 is a diagram for explaining a method of determining whether or not a steel cord has a buckling point.
FIG. 8 is a diagram for explaining a method of measuring a bending stiffness value of a steel cord.

[EMBODIMENTS FOR CARRYING OUT THE INVENTION]

[1] Tire according to the present invention

First, a motorcycle tire according to the present invention will be described.

1. Overall structure

FIG. 1 is a partial schematic cross-sectional view of a tire according to the present invention. In FIG. 1, 1 is a tire, 2 is a tread portion, 3 is a sidewall portion, 4 is a bead portion, 5 is a bead core, 6 is a carcass, 7 is a belt layer, and 8 is a bead apex rubber.
As shown in FIG. 1, the tire 1 according to the present invention includes a carcass 6 extending from a tread portion 2 through a sidewall portion 3 to a bead core 5 of a bead portion 4; and a belt layer 7 arranged radially outer side of the carcass 6 and radially inner side of the tread portion 2 in the tire. FIG. 1 shows 1/4 of the tire radial cross section, and the tire is symmetrical with respect to the equatorial plane and the tire rotation axis.

2. Component

(1) Belt layer

At least one (two in FIG. 1) belt layer 7 is arranged.
FIG. 2 is a schematic perspective view showing an example (in the case of one belt layer) of the configuration of the belt layer in the present invention, wherein 10 is a steel cord and G is a covering rubber. As shown in FIG. 2, the belt layer 7 is formed by coating a cord array body in which steel cords 10 are aligned with a coating rubber G.
Although the number of steel cords 10 arranged in the cord array is appropriately determined in consideration of the rigidity and thickness of the steel cords to be used, usually the number per width of 50 mm (ends) is 30 or more and 50 or less.
In the present invention, a steel belt layer having a steel cord is used as the belt layer, and the steel cord is formed by twisting n strands which is formed by twisting m steel filaments, wherein the twisting directions of the strands and the

steel filaments are same (i.e. an m×n configuration), and m is 1 or more and 3 or less, and n is 2 or more and 6 or less. In addition, the diameter of the steel filament is 0.15 mm or more and 0.25 mm or less.

FIG. 3 is a schematic cross-sectional view showing one example of the configuration of the steel cord in the present invention. In FIG. 3, a steel cord with a 3 × 3 configuration (m = 3, n = 3) is shown, and three of strand 12, in which three steel filaments f are twisted, are twisted to form the steel cord 10.

In the present invention, as the steel filament f, for example, "SWRH72A" (C: 0.69 to 0.75%, Mn: 0.30 to 0.60%, Si: 0. 15 to 0.35%, P: 0.030% or less, S: 0.030% or less) defined in JIS G3506-2017 can be used.

(2) Tread portion

The tread portion 2 has a tread surface that curves in a convex arc shape and extends from the tire equator C toward the tread edge Te.

The tread width Tw has a maximum width between Te on the left and right sides of the tire equator C. As a result, turning at a large bank angle becomes possible. As will be described later, the tread portion 2 may be divided in the tire width direction into an outer region OUT and an inner region IN. The division position may be appropriately set in consideration of the balance between the frictional force generating function and the reaction force generating function of the tread portion 2.

In the present invention, the rubber composition constituting the tread portion (tread rubber composition) has a complex elastic modulus E* (MPa) of 5.0 MPa or measured under the conditions of temperature: 70°C, initial strain: 5%, dynamic strain: ±1%, frequency: 10 Hz, and deformation mode: extension.

Complex elastic modulus E * can be measured, for example, using a viscoelasticity measuring device such as "Eplexor (registered trademark)" manufactured by GABO.

The product of the total cross-sectional area S($mm^2$) of the steel filaments in the cross section of the steel cord and the complex elastic modulus E* (MPa) of the tread rubber composition is 2.00 or less.

The tread portion is not limited to being formed of a single rubber layer. It may be formed of a plurality of layers of rubber composition such as a base layer and a cap layer, and, in this case, the above complex elastic modulus E* indicates the complex elastic modulus E* in the cap layer, which is the outermost layer.

The above complex elastic modulus E*(MPa) of the tread rubber composition can be appropriately adjusted by the compounding materials described later. For example, by increasing the content of fillers such as silica and carbon black, decreasing the content of plasticizer components such as oils and resins, increasing the content of sulfur and accelerators, and the like, the complex elastic modulus E*(MPa) can be increased. Conversely, the complex elastic modulus E*(MPa) can be lowered by decreasing the content of fillers such as silica and carbon black, increasing the content of plasticizer components such as oils and resins, decreasing the content of sulfur and accelerators, and the like.

(3) Others

The carcass 6 has a ply turn-up portion 6b that is turned around the bead core 5 from the inner side to the outer side in the axial direction of the tire, at both ends of a toroidal ply main body 6a spanning between the bead cores 5, 5; and at least one carcass 6 is arranged (One carcass in FIG. 1). Between the ply body portion 6a and the ply turn-up portion 6b, a bead apex rubber 8 is arranged which is tapers outward from the bead core 5 in the radial direction of the tire. A belt reinforcing layer 9 is wound in the tire circumferential direction on the outer side of the belt layer in the tire radial direction.

In one form of the present invention, the tire carcass 6 and belt reinforcing layer 9 comprise organic fiber cords made of organic fibers. Organic fibers include polyester, polyamide, cellulose, and the like. These may be synthetic fibers or biomass-derived fibers. In addition, these fibers may be formed of a single component of synthetic fibers, biomass fibers, or recycled/regenerated fibers; or may be any of hybrid cords twisted them together, cords using multi-filaments in which each filament is combined, and cords having a chemical structure in which the components are chemically bonded.

Example of polyester cords include polyethylene terephthalate (PET) cords, polyethylene naphthalate (PEN) cords, and polyethylene furanoate (PEF) cords. PEF may be used from the viewpoint of being superior in air permeation resistance and easily retaining the air pressure inside the tire compared to other polyester cords. Moreover, a hybrid cord with a cord made of another organic fiber may be used, such as cords in which a part of the polyester cords is replaced by another organic fiber such as a polyamide fiber.

When the polyester cord is a biomass-derived polyester cord, a biomass PET cord using biomass-derived terephthalic acid and ethylene glycol, a biomass PEF using biomass-derived furandicarboxylic acid, or the like can be suitably used.

The biomass polyester cord can be obtained from biomass terephthalic acid, biomass ethylene glycol, etc., which are converted from bioethanol, furfurals, carenes, cymenes, terpenes, etc., converted from compounds derived from various animals and plants, or directly fermented and manufactured from microorganisms, etc.

Polyamide cords include, for example, cords made of aliphatic polyamides, semi-aromatic polyamides, or wholly aromatic polyamides.

Aliphatic polyamide is a polyamide having a skeleton in which linear carbon chains are connected by amide bonds, and includes nylon 4 (PA4), nylon 410 (PA410), nylon 6 (PA6), nylon 66 (PA66), nylon 610 (PA610), nylon 1010 (PA1010), nylon 1012 (PA1012), nylon 11 (PA11), and the like. Among them, nylon 4, nylon 410, nylon 610, nylon 10, nylon 1010, nylon 11, and the like are exemplified from the viewpoint of being easily obtainable and being a partially or completely biomass-derived material.

Examples of nylon 6 and nylon 66 include those obtained by ring-opening polymerization of conventional chemically synthesized caprolactam, and those obtained by condensation polymerization of hexamethylenediamine and adipic acid. In addition, nylon 6 or nylon 66 produced from biocaprolactam, bio-adipic acid and bio-hexamethylenediamine, which have been produced using bio-derived cyclohexane as a starting material, may be used. Moreover, the above-described biomaterial may be obtained from a sugar such as glucose. The nylon 6 and nylon 66 are considered to have the same strength as those conventionally used.

A typical example of nylon 4 includes those produced from 2-pyrrolidone, as the raw material, obtained after converting glutamic acid derived from bio-fermentation into y-aminobutyric acid; but nylon 4 is not limited thereto. Nylon 4 has good thermal and mechanical stability and is characterized by easy polymer structure design. Therefore, it contributes to the improvement of tire performance and strength, and can be preferably used.

Nylon 410, nylon 610, nylon 1010, nylon 1012, nylon 11, and the like can be obtained using, as a raw material, ricinoleic acid obtained from castor oil (castor bean). Specifically, nylon 410, nylon 610 and nylon 1010 can be obtained by condensation polymerization of sebacic acid and dodecanedioic acid, obtained from castor oil, and any diamine compound. Nylon 11 can be obtained by condensation polymerization of 11-aminoundecanoic acid obtained from castor oil.

A semi-aromatic polyamide is a polyamide having an aromatic ring structure in a part of the molecular chain, and examples thereof include nylon 4T (PA4T), nylon 6T (PA6T), and nylon 10T (PA10T).

Nylon 4T, nylon 6T, and nylon 10T can be obtained by using terephthalic acid as a dicarboxylic acid and performing condensation polymerization with a diamine compound having an arbitrary number of carbon atoms. At that time, it is also possible to obtain these nylon materials using the aforementioned biomass-derived terephthalic acid. Since these have a rigid cyclic structure in the molecular chain, they are excellent from the viewpoint of heat resistance.

Further, as the above-mentioned aliphatic polyamide and semi-aromatic polyamide, polyamide 5X (X is the number of carbon atoms derived from dicarboxylic acid and an integer) produced by polymerization of lysine-derived 1,5-pentanediamine with dicarboxylic acids can be mentioned.

The wholly aromatic polyamide is a polyamide having a skeleton in which aromatic rings are linked by amide bonds, and examples thereof include polyparaphenylene terephthalamide. The wholly aromatic polyamide may also be obtained by combining biomass-derived terephthalic acid and phenylenediamine, like the above-mentioned aliphatic polyamide and semi-aromatic polyamide.

Examples of cellulose fibers include rayon, polynosic, cupra, acetate, lyocell, and modal, which are produced from plant materials such as wood pulp. These cellulosic fibers are preferable because not only are the raw materials carbon-neutral, but they also have excellent environmental performance, such as being biodegradable and not emitting harmful gases even if they are incinerated after use. Among the above, rayon, polynosic, and lyocell are particularly preferred in terms of balance of process efficiency, environmental friendliness, and mechanical strength.

In addition, the above-described cord may be a recycled cord obtained by re-spinning a product recovered and refined from used items such as beverage bottles and clothing, regardless of whether it is synthetic or biomass-derived.

The cords described above may be formed by twisting one or more filaments. For example,

those obtained by, after combining two 1100 decitex multifilaments each (in other words, 1100/2 decitex) and applying a primary twist of 48 times/10 cm, putting together two of the primary twisted cords, and applying a final twist in the same number as the primary twist and in the opposite direction to or the same direction as the direction of primary twist;
those obtained by, after combining two 1670 decitex multifilaments each (in other words, 1670/2 decitex) and applying a twist of 40 times/10 cm, putting together two of the primary twisted cords, and applying a final twist; and the like can be used.

By configuring the tire as described above, it is possible to provide a motorcycle tire that can obtain excellent steering stability while using steel cords as belt layer materials, as described later.

3. Mechanism of effect manifestation in tire according to the present invention

The mechanism of effect manifestation in the tire according to the present invention is presumed as follows.

(1) Configuration of steel cord

As described above, when steel cords are used as the belt layer material, there is concern that their high compression stiffness and high bending stiffness may lead to deterioration in steering stability during high-speed turning.

Therefore, the present inventor first conducted extensive studies on the configuration of steel cords having a low compression stiffness value and an appropriate bending stiffness value.

As a result, a steel cord having an m×n configuration, produced by, after forming a strand by twisting together m of steel filaments with a diameter of 0.15 mm or more and 0.25 mm or less, wherein m is one or more and 3 or less, twisting together n of the strands, wherein n is 2 or more and 6 or less, in the same direction as the steel filaments, has a low compression stiffness value and an appropriate bending stiffness value, and is therefore preferably hired as a belt layer material.

That is, first, when the number m of steel filaments forming a strand exceeds 3, a thick strand is formed even if the diameter of the steel filament is small, resulting in an increase in the compression stiffness of the steel cord. In addition, when the steel cord and the rubber composition are combined, the penetration rate of the rubber into the gaps in the strands drops rapidly, so moisture penetrates in the strands, causing rust and deterioration of adhesion performance. On the other hand, when the number m of steel filaments forming a strand is 3 or less, thick strands are not formed, so that the above problems do not occur.

Next, when n exceeds 6 in a steel cord having an m×n configuration, the actual cross-sectional structure of the steel cord becomes a laminar twist structure such as an m×1+m×(n-1) configuration, the strands of the m×1 configuration become core strands, and an increase in compression stiffness is caused. On the other hand, when n is 2 or more and 6 or less, the core strand is not formed, and thus such problems do not occur.

Next, if the diameter of the steel filament is less than 0.15 mm, since the rigidity of the steel filament is low, there is concern that the reaction force generated during turning may decrease. On the other hand, if it exceeds 0.25 mm, an increase in compression stiffness is caused. On the other hand, when the diameter of the steel filament is 0.15 mm or more and 0.25 mm or less, such problems do not occur.

Thus, in the present invention, by adopting a steel cord having a low compression stiffness value as a belt layer material, it is possible to properly follow the deformation of the tread surface during running of the tire, especially deformation under high speed and high load. As a result, it is thought that the occurrence of the buckling phenomenon described above is prevented, stable handling can be obtained even during high-speed turning, and steering stability is improved.

(2) Complex elastic modulus of the rubber composition forming the tread

The inventor of the present invention has thought that it is not sufficient to simply adopt the steel cord as the belt layer material, in order to stably exhibit excellent steering stability, and that the physical properties of the tread rubber that is in direct contact with the road surface must also be taken into consideration. Therefore, further experiments and studies were carried out on the rubber composition constituting the tread portion (tread rubber composition).

As a result, it was found that, when a rubber composition having the complex elastic modulus E*(MPa) of 5.0 MPa or more, measured under the conditions of temperature: 70°C, initial strain: 5%, dynamic strain: ±1%, frequency: 10 Hz, and deformation mode: extension, is used as a tread rubber composition, the belt layer portion is flexibly deformed when the tire is running, making it easy to obtain a large reaction force, the tread rubber applies a sufficient force to the road surface, and the steering stability during high-speed turning was further improved. It is more preferably 6.5 MPa or more. Although the upper limit is not particularly limited, it is preferably 20 MPa or less, and more preferably 10.0 MPa or less.

At this time, it was found that, in order to increase the reaction force generated in the entire tread portion and improve the steering stability during high-speed turning, the product (S×E*) of

> the area occupied by the steel filaments in the belt layer, that is, the total cross-sectional area S($mm^2$) of the steel filaments in the cross section of the one steel cord, and the complex elastic modulus E*(MPa) of the tread rubber composition
>
> must be controlled within an appropriate range. Therefore, further experiments and studies were carried out, and as a result, it was found that (S×E*) should be 2.00 or less. It is more preferably less than 1.70. Although the lower limit is not particularly limited, it is preferably 0.60 or more.

It is considered that since the compression stiffness of the belt layer is reduced, making it easier to follow the road surface, and the tread and belt layer can easily generate reaction force during turning, it becomes possible to improve steering stability during high-speed turning.

[2] A more preferred embodiment of the tire according to the present invention

The tire according to the present invention can obtain even greater effects by adopting the following aspects.

1. Compression stiffness value of steel cord

As described above, in the present invention, the compression stiffness value of the steel cord is low. It is preferable that the compression stiffness value is 65 N/mm or less, since the flexibility increases and the deformation of the tread portion can be more sufficiently followed. Although the lower limit is not particularly limited, it is preferably 40 N/mm or more.

The compression stiffness value of the above steel cord can be measured according to the following procedure. First, a vulcanized rubber molding (vulcanization conditions: 165°C × 18 minutes) in which one steel cord with a length of 25 mm was embedded in the center of a cylindrical rubber with a diameter of 25 mm and a height of 25 mm was prepared as measurement samples. Three of the measurement samples per one specification were made. Next, one correction sample is prepared in the same manner, except that the steel cord is not embedded.

Next, each obtained sample is compressed in the height direction at a speed of 2.0 mm/min using a tensile tester, and the compression load and compression amount are measured. After that, from the measurement data obtained from the measurement samples, and from a graph with the amount of compression on the X axis and the compression load on the Y axis, the maximum value of the slope is calculated, and the simple average of the three measurement samples is calculated. Next, for the correction sample, the maximum value of the slope of the compressive load with respect to the amount of compression is calculated according to the same manner. The value is subtracted from the slope of the measurement sample to calculate the compression stiffness of the steel cord.

Specific measurement of this compression stiffness value will be described with reference to FIGs. 4 to 6. FIG. 4 is a diagram for explaining measurement samples and correction samples. In FIG. 4, K0 is a correction sample in which no steel cord is embedded, and K1 to K3 are three measurement samples in which steel cords are embedded.

FIG. 5 is a schematic side view for explaining a method of measuring the compression stiffness value of a steel cord. Compressed at the above speed, an SS curve with the horizontal axis as the compression distance (compression amount) and the vertical axis as the compression load is obtained.

FIG. 6 is a diagram for explaining a method of calculating a compression stiffness value, and shows SS curves obtained from samples K0 to K3. From FIG. 6, it can be seen that, while the SS curve of K0 has a constant slope, the SS curve of K1 to K3 increases the slope due to the force applied to the steel cord from the middle, and, after the steel cord buckles, the slope returns to the original slope. Since this change in slope is caused by the compression stiffness of the steel cord, the compression stiffness of the steel cord can be obtained by subtracting the maximum slope at K0 from the maximum slope at K1 to K3. Average of the results obtained at K1 to K3 is taken as the compression stiffness of the target steel cord (1133 N/mm in FIG. 6).

2. Buckling point of steel cord

In the present invention, the steel cord preferably has no buckling point. This is because, when there is no buckling point, the steel cord will not break even if it receives a large stress during high-speed turning. In addition, it is possible to suppress the progression of strength reduction due to compression fatigue.

The buckling point of the steel cord described above generally can be obtained from the inflection point where the value of the slope changes from increasing to decreasing in a graph showing the relationship between the slope (N/mm), when measuring the compression stiffness and the amount of compression (mm), shown in FIG. 7, that is from the point showing the compression stiffness, but, if the difference from the minimum value of the slope after the slope reaches the maximum is small, it cannot be clearly determined as the inflection point. Therefore, in the present invention, the difference between the maximum value of the slope (CSmax) and the minimum value of the subsequent slope (CSmin: the slope near the right end of FIG. 7) (Csmax - CSmin) is obtained. If it is 200 N/mm or less, it is determined that there is "no buckling point", and it exceeds 200 N/mm, it is determined that there is a buckling point.

3. Bending stiffness value of steel cord

As described above, in the present invention, the bending stiffness value of the steel cord is low. It is preferably $2.0\times10^{-3}$ Nm or less, since the belt layer can follow the curved tread of the tire more easily, and the ground contact shape can be finished in a desired shape. It is more preferably $1.5\times10^{-3}$ Nm or less. On the other hand, the lower limit is not particularly limited, but is preferably $0.5\times10^{-3}$ Nm or more.

The bending stiffness value of the above steel cord can be measured, for example, using a rigidity tester (eg, 150-D type) manufactured by TABER (USA) according to the following procedure. First, both ends of a steel cord having a

length of 145 mm are attached to clamps of a rigidity tester, and the steel cord 10 is given bending angles of + 15 degrees and -15 degrees as shown in FIG. 8. Then, the average value of the bending moment at + 15 degrees and the bending moment at -15 degrees is defined as the bending stiffness value (Nm).

If the steel cord and the tread rubber are too hard, the tire will feel stiffer and the ride confort will deteriorate. Therefore, the product (FR$\times$E*) of bending stiffness value FR and complex elastic modulus E*(MPa) of the steel cord is preferably $25\times10^{-3}$(MPa·N·m) or less. It is more preferably $15\times10^{-3}$(MPa·N·m) or less, and even more preferably $10\times10^{-3}$(MPa·N·m) or less. Although the lower limit is not particularly limited, it is preferably $5\times10^{-3}$(MPa·N·m) or more, more preferably $7\times10^{-3}$ (MPa ·N·m) or more.

4. Coating rubber of belt layer

The belt layer can be obtained by coating the steel cord with a rubber composition having a predetermined composition. In the present invention, the rubber composition preferably contains organic acid cobalt. As a result, the adhesion to steel cords is remarkably improved, and good steel cord coverage can be ensured.

Specific examples of the cobalt organic acid include cobalt stearate, cobalt boron neodecanoate, cobalt naphthenate, and cobalt neodecanoate. Cobalt stearate is preferable from a view point having viscosity reduction effect. Cobalt boron neodecanoate is preferable from a view point having good elongation at break after oxidative deterioration and good adhesion to steel cords after wet heat deterioration.

The content of the organic acid cobalt is preferably 0.05 parts by mass or more, more preferably 0.08 parts by mass or more in terms of cobalt, per 100 parts by mass of the rubber component. If the amount is less than 0.05 parts by mass, there is a risk that sufficient steel cord adhesion cannot be ensured. On the other hand, it is preferably 0.20 parts by mass or less, more preferably 0.17 parts by mass or less. If it exceeds 0.20 parts by mass, the breaking elongation after oxidative deterioration tends to decrease.

5. Multi-layered belt layers

In the present invention, the belt layer may be one layer, but it is preferable that the belt layer is multilayered with two or more layers. At this time, the average distance D (mm) between the steel cords in at least one pair of belt layers adjacent in the radial direction of the tire is preferably 0.6 mm or less, more preferably 0.5 mm or less, and further preferably 0.45 mm or less.

As a result, the pair of belt layers cooperate with each other to appropriately constrain the tread portion and suppress the amount of deformation of the tread portion during rolling, thereby further improving steering stability during high-speed running can be attained.

The average distance D between the steel cord layers here is the distance between the inner surface of the steel cord of the surface side belt layer and the outer surface of the steel cord of the inner belt layer on the equator plane of the two belt layers that overlap each other.

In the case of multi-layered belt layers, in at least one pair of belt layers adjacent in the radial direction of the tire, the angle formed by the steel cords in the belt layers in the tread portion in the tire circumferential direction is preferably 65° or less, more preferably 60° or less, and further preferably 58° or less.

By stacking and arranging the belt layers inclined to each other at an appropriate angle, a hoop effect can be obtained, and substantially the entire width of the tread portion can be firmly restrained, and the amount of deformation of the tread portion during rolling can be suppressed. Therefore, it is possible to further improve the steering stability during high-speed running.

The above angle is the angle of the steel cord with respect to the circumferential direction of the tire when the tire is not filled with air, and can be confirmed by peeling off the tread portion from the radially outer side of the tire.

When the number of belt layers is two, the ratio (L2 /L1) of the tire width direction length L2 (mm) of the radially outer belt layer to the tire width direction length L1 (mm) of the radially inner belt layer is preferably greater than 1.00. By relatively increasing the tire width direction length of the belt layer on the outer side in the tire radial direction, it is possible to easily obtain the hoop effect, and it is thought that it is possible to easily generate a large reaction force in the tread portion.

The ratio (L2/L1) of the tire width direction length L2 (mm) of the tire radially outer belt layer to the tire width direction length L1 (mm) of the tire radially inner belt layer is preferably greater than 1.00, more preferably greater than 1.05, and further preferably greater than 1.10, as described above. On the other hand, although the upper limit is not particularly limited, it is preferably less than 1.30, more preferably less than 1.25, and further preferably less than 1.20.

The length of the belt layer in the tire width direction here refers to the length of the arc drawn by the belt layer in the tire width direction cross section. It can be obtained by measuring the bead portion of the cross section cut out from the tire in the radial direction, aligned with the standardized rim.

Further, when three or more belt layers are provided, it is preferable that the L2/L1 relationship described above is established between adjacent belt layers, and it is preferable that the belt layer width in the tire width direction gradually

decreases from the outermost layer to the innermost layer.

6. Division of tread

In the present invention, it is preferable that the tread portion is divided in the tire width direction. That is, when the vehicle runs straight, the tire contacts the road surface with a high contact pressure mainly at the widthwise inner portion of the tread portion. On the other hand, when turning, there is a tendency for the widthwise outer portion of the tread portion to become a contact surface due to lateral force. This tendency becomes more pronounced during high-speed running, and there is also the risk of skidding due to centrifugal force.

For this reason, a strong reaction force is required in the inner portion of the tread portion, and a strong frictional force is required in the outer portion; and it is preferable to divide the tread portion into an inner region and an outer region sandwiching the inner region according to the required functions. In this case, it is preferable that both the inner region and the outer region satisfy the aforementioned complex elastic modulus E*(MPa) of 5.0 MPa or more and (S×E*) of 2.00 or less.

At this time, as the rubber composition constituting the outer region of the tread portion, it is preferable to use a rubber composition containing 25% by mass or less of styrene in the rubber component and having a Tg of -18°C or higher. That is, by containing 25% by mass or less of styrene in the rubber component, the interaction and aggregation between the styrene portions are weakened, allowing the polymer molecules to move flexibly and increasing the contact area between the road surface and the polymer. As a result, the grip performance during high-speed turning is improved, and the steering stability is improved. Since a certain amount of styrene is contained in the rubber component, the styrene portions in the polymer, which move flexibly, tend to generate heat due to friction with each other. As a result, movement of polymer molecules is more facilitated, the grip performance during high-speed turning is further improved, and more excellent steering stability can be obtained. In addition, since a rubber composition with a Tg as high as -18°C or higher tends to generate heat, the movement of polymer molecules is further facilitated, the grip performance during high-speed turning is improved and superior steering stability can be obtained.

For the above reason, even when the tread portion is not divided, it is preferred that the rubber composition of the tread portion contains 25% by mass or less of styrene in the rubber component and has a Tg of -18°C or higher.

The glass transition temperature (Tg) of the rubber composition described above can be obtained from the temperature distribution curve of tan δ measured using a viscoelasticity measuring device such as the "Eplexor (registered trademark)" series manufactured by GABO. Specifically, the temperature (tan δ peak temperature) corresponding to the largest tan δ value in the obtained tan δ temperature distribution curve is taken as the glass transition temperature (Tg). The Tg is more preferably -16°C or higher, and further preferably -15°C or higher. On the other hand, the upper limit is not particularly limited, but is preferably 0°C or lower, more preferably -8°C or lower, and further preferably -10°C or lower.

In the present invention, it is preferable that the content ratio of carbon black in the outer region of the tread portion is higher than the content ratio of carbon black in the inner region of the tread portion.

By making the carbon black content ratio in the outer region higher than the carbon black content ratio in the inner region, when a load is applied to the outer region during high-speed turning, the temperature tends to rise due to friction between the carbon black and the polymer, and the movement of the polymer can be further facilitated, so that the grip performance during high-speed turning can be improved, and the steering stability can be improved.

On the other hand, since the amount of carbon black is small in the inner region, heat generation is suppressed, and the rigidity of the inner region, which tends to contact the ground at the beginning of turning, is ensured, and the load can be easily applied to the outer region during turning. As a result, the temperature of the outer region is likely to rise, which facilitates the movement of the polymer, so that the grip performance during high-speed turning can be improved, and the steering stability can be improved.

The specific difference between the carbon black content ratio in the outer region and the carbon black content ratio in the inner region is preferably 20% by mass or more, and more preferably 30% by mass or more. On the other hand, although the upper limit is not particularly limited, it is preferably 40% by mass or less, more preferably 38% by mass or less.

7. Relationship between tread width and belt layer width

In the present invention, the ratio (Lm/Tw) of the maximum length Lm (mm) of the belt layer in the tire width direction to the tread width Tw (mm) is preferably 1.00 or more. By satisfying such a relationship, that is, by setting the maximum length Lm of the belt layer in the tire width direction to be equal to or greater than the tread width Tw, the belt layer draws a circular arc inside the tread portion in the tire radial direction, further enhancing the hoop effect. As a result, it is possible to make the shape of the tread portion surface easy to maintain in a round shape. Therefore, when the motorcycle turns, the vehicle body can be easily tilted, and the steering stability during high-speed running can be improved. Furthermore, even when the vehicle body is tilted, the belt layer exists on the radially inner side of the ground contact surface of the tire, making it easier to exert shearing force, and it is thought that it is possible to further improve steering

stability.

The maximum length Lm in the tire width direction of the belt layer referred to here refers to the maximum length among the lengths of the belt layers in the tire width direction. That is, when there is one belt layer, the length of the belt layer in the tire width direction is Lm, and when there are two or more layers, the longest length among them is Lm.

Also, the tread width Tw refers to the length of the tread portion parallel to the tire width direction, and can be measured in a cross section obtained by cutting the tire in the width direction, with the bead portion aligned with the standardized rim width.

The ratio (Lm/Tw) of the maximum length Lm (mm) of the belt layer in the tire width direction to the tread width Tw (mm) is preferably 1.00 or more, as described above. It is more preferably 1.05 or more, and further preferably 1.10 or more. On the other hand, although the upper limit is not particularly limited, it is preferably 1.50 or less, more preferably 1.45 or less, and further preferably 1.40 or less.

[3] Embodiments for carrying out the invention

The present invention will be specifically described below based on embodiments for carrying out the invention.

1. Tread rubber composition

In the present invention, the tread rubber composition can be obtained from various compounding materials such as rubber components, fillers, softeners, vulcanizing agents and vulcanization accelerators described below.

(1) Compounding material

(a) Rubber component

In the present invention, the rubber component is not particularly limited, and rubbers (polymers) commonly used in the manufacture of tires, which include diene-based rubbers such as isoprene-based rubber, butadiene rubber (BR), styrene-butadiene rubber (SBR), and nitrile rubber (NBR); butyl-based rubber such as butyl rubber; thermoplastic elastomers such as styrene-butadiene-styrene block copolymers (SBS), and styrene-butadiene copolymers (SB); and the like, can be used. Considering that the styrene content in the rubber component is preferably 25% by mass or less, as mentioned above, it preferably contains any one of styrenic polymers such as SBR, SBS, and SB, and more preferably contains SBR. These styrene polymers and other rubber components may be used in combination. For example, combination of SBR and BR, and combination of SBR, BR and isoprene rubber are preferable.

(a-1) SBR

The weight average molecular weight of SBR is, for example, more than 100,000 and less than 2,000,000. The vinyl bond content (1,2-bonded butadiene unit content) of SBR is, for example, more than 5 mol% and less than 70 mol%. The structural identification of SBR (measurement of styrene content and vinyl bond content) can be performed using, for example, an equipment of JNM-ECA series manufactured by JEOL Ltd.

The content of SBR in 100 parts by mass of the rubber component is preferably 55 parts by mass or more, more preferably 60 parts by mass or more, and further preferably 65 parts by mass or more.

The SBR is not particularly limited, and for example, emulsion-polymerized styrene-butadiene rubber (E-SBR), solution-polymerized styrene-butadiene rubber (S-SBR), and the like can be used. SBR may be either unmodified SBR or modified SBR. In addition, hydrogenated SBR obtained by hydrogenating the butadiene portion of SBR may be used. Hydrogenated SBR may be obtained by subsequently hydrogenating the BR portion of SBR, or by copolymerizing styrene, ethylene, and butadiene to give similar structures. Alternatively, it may be an oil-extended SBR.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional groups include amino group, amido group, silyl group, alkoxysilyl group, isocyanate group, imino group, imidazole group, urea group, ether group, carbonyl group, oxycarbonyl group, mercapto group, sulfide group, disulfide group, sulfonyl group, sulfinyl group, thiocarbonyl group, ammonium group, imide group, hydrazo group, azo group, diazo group, carboxyl group, nitrile group, pyridyl group, alkoxy group, hydroxyl group, oxy group, and epoxy group. In addition, these functional groups may have a substituent.

As modified SBR, for example, SBR modified with a compound (modifying agent) represented by the following formula can be used.

[Chemical 1]

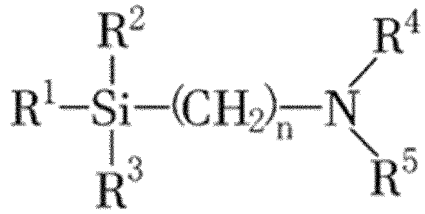

In the formula, $R^1$, $R^2$ and $R^3$ represent, the same or different, alkyl group, alkoxy group, silyloxy group, acetal group, carboxyl group (-COOH), mercapto group (-SH) or derivatives thereof. $R^4$ and $R^5$ represent, the same or differrent, hydrogen atoms or alkyl groups. $R^4$ and $R^5$ may be combined to form a ring structure with nitrogen atoms. n represents an integer.

As the modified SBR modified with the compound (modifier) represented by the above formula, SBR (such as modified SBR described in JP-A-2010-111753) in which the polymerization terminal (active terminal) of solution-polymerized styrene-butadiene rubber (S-SBR) is modified with the compound represented by the above formula can be used.

As $R^1$, $R^2$ and $R^3$, an alkoxy group is preferable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is preferable. n is preferably 1 to 5, more preferably 2 to 4, and even more preferably 3. Further, when $R^4$ and $R^5$ are bonded to form a ring structure together with a nitrogen atom, a 4- to 8-membered ring is preferable. The alkoxy group also includes a cycloalkoxy group (for example, cyclohexyloxy group) and an aryloxy group (for example, phenoxy group, benzyloxy group).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, methoxysilane, 3-diethylaminopropyltrimethoxysilane, 2-diethylaminoethyltriethoxysilane, and 3-diethylaminopropyltriethoxysilane. These may be used alone or in combination of two or more.

As modified SBR, modified SBR modified with the following compounds (modifying agents) can also be used. Examples of the modifying agent include polyglycidyl ethers of polyhydric alcohols such as ethylene glycol diglycidyl ether, glycerin triglycidyl ether, trimethylolethanetriglycidyl ether, and trimethylolpropane triglycidyl ether;

polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene;

epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3-(triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3-(methyldibutoxysilyl)

propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-dit-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl - ε -caprolactam, N-phenyl- ε - caprolactum, N-methyl- ω -laurilolactum, N-vinyl- ω -laurilolactum, N-methyl- β - propiolactam, and N-phenyl- β -propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. Modification with the above compound (modifying agent) can be carried out by a known method.

As SBR, for example, SBR manufactured and sold by Sumitomo Chemical Co., Ltd., JSR Co., Ltd., Asahi Kasei Co., Ltd., Nippon Zeon Co., Ltd., etc. can be used. SBR may be used alone or in combination of two or more.

(a-2) BR

In the present invention, the tread rubber composition may further contain BR, as necessary. In this case, the content of BR in 100 parts by mass of the rubber component is preferably 30 parts by mass or more, more preferably 35 parts by mass or more. On the other hand, it is preferably 45 parts by mass or less, more preferably 40 parts by mass or less.
The weight average molecular weight of BR is, for example, more than 100,000 and less than 2,000,000. The vinyl bond content of BR is, for example, more than 1% by mass and less than 30% by mass. The cis amount of BR is, for example, more than 1% by mass and less than 98% by mass. The trans amount of BR is, for example, more than 1% by mass and less than 60% by mass.
BR is not particularly limited, and BR with high cis content (cis content is 90% or more), BR with low cis content, BR containing syndiotactic polybutadiene crystals, and the like can be used. BR may be either non-modified BR or modified BR, and modified BR includes modified BR into which the above-mentioned functional groups have been introduced. These may be used alone or in combination of two or more. The cis content can be measured by infrared absorption spectrometry.
As BR, for example, products of Ube Industries, Ltd., JSR Corporation, Asahi Kasei Co., Ltd., Nippon Zeon Co., Ltd., etc. can be used.

(a-3) Isoprene rubber

In the present invention, the tread rubber composition may further contain an isoprene-based rubber as necessary. In this case, the content of the isoprene-based rubber in 100 parts by mass of the rubber component is preferably more than 20 parts by mass and less than 35 parts by mass.
The isoprene rubber includes natural rubber (NR), isoprene rubber (IR), reformed NR, modified NR, modified IR, and the like.
As NR, for example, those commonly used in the tire industry, such as SIR20, RSS#3, and TSR20, can be used. The IR is not particularly limited, and those commonly used in the tire industry, such as IR2200, can be used. Reformed NR includes deproteinized natural rubber (DPNR), high-purity natural rubber (UPNR), and the like. Modified NR includes epoxidized natural rubber (ENR), hydrogenated natural rubber (HNR), grafted natural rubber, and the like. Modified IR include epoxidized isoprene rubber, hydrogenated isoprene rubber, grafted isoprene rubber, and the like. These may be used alone or in combination of two or more.

(a-4) Other rubber components

In addition, as other rubber components, rubbers (polymers) commonly used for manufacturing tires, such as nitrile rubber (NBR), may be included.

(b) Compounding materials other than rubber components

(b-1) Filler

In the present invention, the rubber composition preferably contains a filler. Examples of specific fillers include carbon black, silica, graphite, calcium carbonate, talc, alumina, clay, aluminum hydroxide, and mica.

(i) Carbon black

In the present invention, the tread rubber composition preferably contains carbon black. The content of carbon black with respect to 100 parts by mass of the rubber component is preferably 65 parts by mass or more, more preferably 70 parts by mass or more, and further preferably 75 parts by mass or more. On the other hand, it is preferably 90 parts by mass or less, more preferably 85 parts by mass or less, and further preferably 80 parts by mass or less.

Carbon black is not particularly limited. Examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; and channel blacks (channel carbon blacks) such as EPC, MPC and CC. These may be used alone or in combination of two or more.

The CTAB (Cetyl Tri-methyl Ammonium Bromide) specific surface area of carbon black is preferably 130 $m^2/g$ or more, more preferably 160 $m^2/g$ or more, and further preferably 170 $m^2/g$ or more. On the other hand, it is preferably 250 $m^2/g$ or less, more preferably 200 $m^2/g$ or less. The CTAB specific surface area is a value measured according to ASTM D3765-92.

Specific carbon blacks are not particularly limited, and specific examples thereof include N134, N110, N220, N234, N219, N339, N330, N326, N351, N550, and N762. As commercially available products, products manufactured by Asahi Carbon Co., Ltd., Cabot Japan Co., Ltd., Tokai Carbon Co., Ltd., Mitsubishi Chemical Co., Ltd., Lion Corporation, Shin Nikka Carbon Co., Ltd., Columbia Carbon Co., Ltd., etc. can be used. These may be used alone or in combination of two or more.

(ii-1) Silica

In the present invention, the tread rubber composition preferably contains silica together with a silane coupling agent, as necessary.

BET specific surface area of silica is preferably more than 140 $m^2/g$, more preferably more than 160 $m^2/g$, from the viewpoint of obtaining good durability performance. On the other hand, it is preferably less than 250 $m^2/g$, more preferably less than 220 $m^2/g$, from the viewpoint of obtaining good rolling resistance during high-speed running. The BET specific surface area mentioned above is the value of $N_2SA$ measured by the BET method according to ASTM D3037-93.

The content of silica with respect to 100 parts by mass of the rubber component is preferably 30 parts by mass or more, more preferably 45 parts by mass or more, and further preferably 60 parts by mass or more. On the other hand, it is preferably 170 parts by mass or less, more preferably 140 parts by mass or less, and further preferably 80 parts by mass or less.

Examples of silica include dry silica (anhydrous silica) and wet silica (hydrous silica). Among them, wet silica is preferable because it has many silanol groups. Silica made from water-containing glass or the like, or silica made from biomass materials such as rice husks may also be used.

Examples of silica that can be used include products of Evonik Industries, Rhodia, Tosoh Silica Co., Ltd., Solvay Japan Co., Ltd, and Tokuyama Corporation.

In the case of a silica-based tread rubber composition containing a large amount of silica, it is preferable to add conductive fillers such as graphite and fine metal fibers in order to efficiently release static electricity accumulated in the tire to the road surface.

Further, a conductive rubber layer having a high carbon black content may be provided in the central portion of the tread portion. However, since such an electrically conductive rubber layer makes little contribution to steering stability during high-speed turning, it is not necessary to satisfy the relationships such as physical properties.

(ii-2) Silane coupling agent

When silica is used as the filler reinforcing agent, the rubber composition preferably contains a silane coupling agent together with silica. The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

Examples of silane coupling agents that can be used include products of Evonik Industries, Momentive, Shin-Etsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 25 parts by mass with respect to 100 parts by mass of silica.

(iii) Other fillers

If necessary, the rubber composition may further contain fillers, such as graphite, calcium carbonate, talc, alumina, clay, aluminum hydroxide, mica, which are commonly used in the tire industry, in addition to the carbon black and silica described above. These contents are, for example, more than 0.1 parts by mass and less than 200 parts by mass with respect to 100 parts by mass of the rubber component.

(b-2) Plasticizer component

The tread rubber composition may contain oil (including extender oil), liquid rubber, and resin as plasticizers (rubber softening components). The plasticizer component is a component that can be extracted from the vulcanized rubber with acetone. The total content of the plasticizer component is preferably, for example, 10 parts by mass or more, and more preferably 30 parts by mass or more, with respect to 100 parts by mass of the rubber component. On the other hand, it is preferably 50 parts by mass or less, and more preferably 40 parts by mass or less. The content of oil also includes the amount of oil contained in the rubber (oil-extended rubber).

The amount of acetone extracted is obtained by immersing a vulcanized rubber test piece in acetone for 72 hours in accordance with JIS K 6229 to extract soluble components, measuring the mass of each test piece before and after extraction, and using the following formula.

$$\text{Acetone extraction amount (\%)} = \{(\text{mass of rubber test piece before extraction} - \text{mass of rubber test piece after extraction}) / (\text{mass of rubber test piece before extraction})\} \times 100$$

(i) Oil

Examples of the oil include mineral oil, generally referred to as process oil, vegetable oil and fat, and a mixture thereof. As the mineral oil (process oil), for example, a paraffinic process oil, an aroma-based process oil, a naphthene

process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more. Moreover, from the viewpoint of life cycle assessment, waste oil after being used as a lubricating oil for mixers for rubber mixing, automobile engines, etc., waste cooking oil, etc. may be used as appropriate.

Specific examples of process oils (mineral oils) include products of Idemitsu Kosan Co., Ltd., Sankyo Yuka Kogyo Co., Ltd., ENEOS Corporation, Orisoi Co., Ltd., H&R Co., Ltd., Toyokuni Oil Co., Ltd., Showa Shell Sekiyu Co., Ltd., Fuji Kosan Co., Ltd., etc.

(ii) Liquid rubber

The liquid rubber mentioned as a plasticizer is a polymer that is in a liquid state at room temperature (25°C), and is a rubber component that can be extracted from a vulcanized tire by acetone extraction. Examples of liquid rubbers include farnesene-based polymers, liquid diene-based polymers, and hydrogenated products thereof.

A farnesene-based polymer is a polymer obtained by polymerizing farnesene, and has structural units based on farnesene. Farnesene includes α-farnesene ((3E,7E)-3,7,11-trimethyl-1,3,6,10-dodecatetraene) and β-farnesene (7,11-dimethyl-3-methylene-1,6,10-dodecatriene).

The farnesene-based polymer may be a homopolymer of farnesene (farnesene homopolymer) or a copolymer of farnesene and a vinyl monomer (farnesene-vinyl monomer copolymer).

Liquid diene-based polymers include liquid styrene-butadiene copolymer (liquid SBR), liquid butadiene polymer (liquid BR), liquid isoprene polymer (liquid IR), liquid styrene-isoprene copolymer (liquid SIR), and the like.

Liquid diene-based polymer has a polystyrene equivalent weight average molecular weight (Mw) measured by gel permeation chromatography (GPC) of, for example, more than $1.0\times10^3$ and less than $2.0\times10^5$. Here, Mw of a liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd., Clay Valley Co., Ltd., etc. can be used.

(iii) Resin component

The resin component also functions as a tackifier component and may be solid or liquid at room temperature. Specific examples of resin components include rosin-based resin, styrene resin, coumarone resin, terpene resin, C5 resin, C9 resin, C5C9 resin, and acrylic resin. Two or more kinds of the resin components may be used in combination. The content of the resin component with respect to 100 parts by mass of the rubber component is preferably more than 2 parts by mass and less than 45 parts by mass, and more preferably less than 30 parts by mass. These resin components may be provided with modified groups capable of reacting with silica or the like, as necessary.

A rosin-based resin is a resin whose main component is rosin acid obtained by processing rosin. The rosin-based resins (rosins) can be classified according to the presence or absence of modification, and can be classified into non-modified rosin (unmodified rosin) and modified rosin (rosin derivative). Examples of unmodified rosins include tall rosins (also known as tall oil rosins), gum rosins, wood rosins, disproportionated rosins, polymerized rosins, hydrogenated rosins, and other chemically modified rosins. The modified rosin is a modified unmodified rosin, and includes rosin esters, unsaturated carboxylic acid-modified rosins, unsaturated carboxylic acid-modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples

of the monomer component contained in the skeleton other than coumarone and indene include styrene, α-methylstyrene, methylindene, and vinyltoluene.

The content of the coumarone-indene resin is, for example, more than 1.0 parts by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton Co. Ltd., Eastman Chemical Co. Ltd., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acryl means methacryl and acryl.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol

group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., JX Energy Co., Ltd., Arakawa Chemical Industry Co., Ltd., Taoka Chemical Industry Co., Ltd. can be used.

(b-3) Stearic acid

In the present invention, the tread rubber composition preferably contains stearic acid. Content of stearic acid is, for example, more than 0.5 parts by mass and less than 10.0 parts by mass with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(b-4) Anti-aging agent

In the present invention, the tread rubber composition preferably contains an anti-aging agent. Content of the anti-aging agent is, for example, more than 0.5 parts by mass and less than 10 parts by mass, and more preferably 1 part by mass or more with respect to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-5) Wax

In the present invention, the rubber composition preferably contains wax. Content of the wax is, for example, 0.5 to 20 parts by mass, preferably 1.0 to 15 parts by mass, and more preferably 1.5 to 10.0 parts by mass with respect to 100 parts by mass of the rubber component.

The wax is not particularly limited, and examples thereof include petroleum waxes such as paraffin wax and microcrystalline wax; natural waxes such as plant wax and animal wax; and synthetic waxes such as a polymer of ethylene or propylene. These may be used alone or in combination of two or more.

As the wax, for example, products of Ouchi Shinko Kagaku Kogyo Co., Ltd., Nippon Seiro Co., Ltd., Seiko Kagaku Co., Ltd., etc. can be used.

(b-6) Zinc oxide

The tread rubber composition may contain zinc oxide. Content of zinc oxide is, for example, more than 0.5 parts by mass and less than 10 parts by mass with respect to 100 parts by mass of the rubber component. As the zinc oxide, conventionally known ones can be used, for example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(b-7) Cross-linking agent and vulcanization accelerator

The tread rubber composition preferably contains a cross-linking agent such as sulfur. Content of the cross-linking agent is, for example, more than 0.1 parts by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As sulfur, for example, products of Tsurumi Chemical Industry Co., Ltd., Karuizawa Io Co., Ltd., Shikoku Kasei Kogyo Co., Ltd., Flexsys Co., Ltd., Nihon Kantan Kogyo Co., Ltd., Hosoi Chemical Industry Co., Ltd., etc. can be used.

Examples of cross-linking agents other than sulfur include vulcanizing agents containing sulfur atom such as

Tackirol V200 manufactured by Taoka Chemical Industry Co., Ltd., and KA9188 (1,6-bis (N, N'-dibenzylthiocarbamoyldithio) hexane) manufactured by Lanxess Co., Ltd.; and organic peroxides such as dicumylperoxide.

The tread rubber composition preferably contains a vulcanization accelerator. Content of the vulcanization accelerator is, for example, more than 0.3 parts by mass and less than 10.0 parts by mass with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, and N, N'-diisopropyl-2-benzothiazolesulfenamide; and guanidine-based vulcanization accelerators such as diphenylguanidine, di-ortho-tolylguanidine and ortho-tolylbiguanidine. These may be used alone or in combination of two or more.

(b-8) Others

In addition to the above components, the tread rubber composition may further contain additives commonly used in the tire industry, such as fatty acid metal salts, carboxylic acid metal salts, organic peroxides, and anti-reversion agents. etc., as necessary. Content of these additives is, for example, more than 0.1 part by mass and less than 200 parts by mass with respect to 100 parts by mass of the rubber component.

(2) Production of tread rubber composition

The tread rubber composition is produced by appropriately adjusting the various compounding materials described above and performing a general method, for example, a manufacturing method including a base kneading step of kneading a rubber component with a filler such as carbon black, and a finish kneading step of kneading the kneaded product obtained in the base kneading step and a cross-linking agent.

Kneading can be performed using a known (closed) kneader such as a Banbury mixer, kneader, open roll, or the like.

The kneading temperature in the base kneading step is, for example, more than 50 °C and less than 200 °C, and the kneading time is, for example, more than 30 seconds and less than 30 minutes. In the base kneading step, in addition to the above components, compounding agents conventionally used in the rubber industry, such as softeners such as oils, zinc oxide, anti-aging agents, waxes, vulcanization accelerators, etc. may be appropriately added and kneaded as necessary.

In the finish kneading step, the kneaded product obtained in the base kneading step and the cross-linking agent are kneaded. The kneading temperature in the finish kneading step is, for example, above room temperature and lower than 80 °C, and the kneading time is, for example, more than 1 minute and less than 15 minutes. In the finish kneading step, in addition to the above components, a vulcanization accelerator, zinc oxide and the like may be appropriately added and kneaded as necessary.

2. Belt layer

(1) Coating rubber composition

In the present invention, the coating rubber composition with which the steel cord is coated can be obtained from the basically same compounding materials as the tread rubber composition described above.

(a) Rubber component

In the coating rubber composition, rubbers (polymers) commonly used for manufacturing tires can be used, as the rubber component. Examples of the rubber include diene rubber such as isoprene-based rubber, butadiene rubber (BR), styrene butadiene rubber (SBR), and nitrile rubber (NBR); and butyl-based rubber such as butyl rubber. Among these, isoprene-based rubbers are preferred, and it is preferable to use NR since the polyisoprene has a cis structure of close to 100% and a tensile strength superior to other rubber components. In addition, SBR and BR may be used together as necessary.

(a-1) Isoprene-based rubber

In the coating rubber composition, content of the isoprene-based rubber in 100 parts by mass of the rubber component is preferably 60 parts by mass or more, more preferably 80 parts by mass or more, and further preferably 90 parts by mass or more.

(a-2) SBR

In the coating rubber composition, 5 parts by mass or more and 25 parts by mass or less of SBR may be used together with NR as the rubber component, as necessary.

(a-3) BR

In the coating rubber composition, 5 parts by mass or more and 25 parts by mass or less of BR may be used in combination with the above NR and SBR as the rubber component, as necessary.

(a-4) Other rubber components

In addition, as other rubber components, rubber (polymer) commonly used for manufacturing tires such as nitrile rubber (NBR) may be included, as necessary.

(b) Compounding materials other than rubber components

(b-1) Filler

(i)Carbon black

In the coating rubber composition, content of carbon black is preferably, for example, 10 parts by mass or more and 100 parts by mass or less with respect to 100 parts by mass of the rubber component. It is more preferably 40 parts by mass or more and 70 parts by mass or less, and further preferably 50 parts by mass or more and 60 parts by mass or less.

(ii) Silica

It is also preferable that the coating rubber composition contains silica, and a silane coupling agent may be used in combination, as necessary. The content of silica with respect to 100 parts by mass of the rubber component is preferably 3 parts by mass or more, and more preferably 5 parts by mass or more when not used in combination with a silane coupling agent. On the other hand, it is preferably 25 parts by mass or less, and more preferably 15 parts by mass or less. When performing combined use with a silane coupling agent, 25 mass parts or more are preferable. On the other hand, it is preferably 50 parts by mass or less, more preferably 40 parts by mass or less, and further preferably 30 parts by mass or less.

(iii) Silane coupling agent

In the coating rubber composition, content of the silane coupling agent is, for example, more than 3 parts by mass and less than 15 parts by mass with respect to 100 parts by mass of silica.

(iv) Other fillers

The coating rubber composition may also contain fillers such as graphite, calcium carbonate, talc, alumina, clay, aluminum hydroxide and mica. These contents are, for example, more than 0.1 parts by mass and less than 200 parts by mass with respect to 100 parts by mass of the rubber component.

(b-2) Curable resin component

The coating rubber composition preferably contains a curable resin component such as a modified resorcin resin and a modified phenol resin. As a result, the adhesiveness to the steel cord can be improved without greatly deteriorating heat build-up and elongation at break, and a large reaction force can be easily generated in the rubber and steel cord.

Examples of specific modified resorcin resins include Sumikanol 620 (modified resorcin resin) manufactured by

Taoka Chemical Co., Ltd. Examples of modified phenol resins include PR12686 (cashew oil modified phenol resin) manufactured by Sumitomo Bakelite Co., Ltd.

Content of the curable resin component is, for example, preferably 1 part by mass or more and more preferably 2 parts by mass or more with respect to 100 parts by mass of the rubber component from the viewpoint of sufficiently improving the complex elastic modulus and obtaining a large reaction force during deformation. On the other hand, it is preferably 10 parts by mass or less, and more preferably 8 parts by mass or less, from the viewpoint of maintaining breaking strength.

When using the modified resorcinol resin, it is preferable to contain a methylene donor as a curing agent. Examples of methylene donors include hexamethylenetetramine (HMT), hexamethoxymethylolmelamine (HMMM) and hexamethylolmelamine pentamethyl ether (HMMPME). It is preferable to contain 5 parts by mass or more and about 15 parts by mass with respect to 100 parts by mass of the curable resin component. If the content is too small, there is a possibility that a sufficient complex elastic modulus cannot be obtained. On the other hand, if it is too large, the viscosity of the rubber may increase and the workability may deteriorate.

As a specific methylene donor, for example, Sumikanol 507 manufactured by Taoka Chemical Co., Ltd. can be used.

(b-3) Resin component

From the viewpoint of workability (imparting tackiness), the coating rubber composition preferably contains a resin component as necessary. Content of the resin component is preferably more than 2 parts by mass and less than 45 parts by mass, and more preferably less than 30 parts by mass with respect to 100 parts by mass of the rubber component.

(b-4) Organic acid cobalt

The coating rubber composition preferably contains organic acid cobalt. Since the organic acid cobalt plays a role of cross-linking the cord and the rubber, the adhesion between the cord and the rubber can be improved by blending this component.

Examples of organic acid cobalt include cobalt stearate, cobalt naphthenate, cobalt neodecanoate, and cobalt boron-3 neodecanoate.

Content of the organic acid cobalt is preferably 500 ppm or more, more preferably 700 ppm or more, and further preferably 900 ppm or more, as the cobalt concentration in the coating rubber. On the other hand, it is preferably 1500 ppm or less, and more preferably 1300 ppm or less. If the amount is too small, there is a risk that sufficient adhesion between the plated layer of the steel cord and the rubber cannot be ensured. On the other hand, if it is too large, the oxidation deterioration of the rubber becomes remarkable, and there is a possibility that the breaking properties deteriorate.

(b-5) Anti-reversion (vulcanization reversion) agent

The coating rubber composition preferably contains an anti-reversion agent, as necessary. This suppresses reversion (vulcanization reversion) and improves durability. Content of the anti-reversion agent is preferably 0.1 parts by mass or more and 3 parts by mass or less, more preferably 0.2 parts by mass or more and 2.5 parts by mass or less and further preferably 0.3 parts by mass or more and 2 parts by mass or less with respect to 100 parts by mass of the rubber component. As a specific anti-reversion agent, for example, Parkalink 900 (1,3-bis(citraconimidomethyl)benzene) manufactured by Flexsys can be used.

(b-6) Anti-aging agent

In the coating rubber composition, content of the anti-aging agent is, for example, more than 1 part by mass and less than 10 parts by mass with respect to 100 parts by mass of the rubber component.

(b-7) Stearic acid

In the coating rubber composition, content of the stearic acid is, for example, more than 0.5 parts by mass and less than 10.0 parts by mass with respect to 100 parts by mass of the rubber component.

(b-8) Zinc oxide

In the coating rubber composition, content of the zinc oxide is, for example, more than 0.5 parts by mass and less than 15 parts by mass with respect to 100 parts by mass of the rubber component.

(b-9) Cross-linking agent and vulcanization accelerator

In the coating rubber composition, content of the cross-linking agent is, for example, more than 0.1 parts by mass and less than 10.0 parts by mass with respect to 100 parts by mass of the rubber component.
In the coating rubber composition, content of the vulcanization accelerator is, for example, more than 0.3 parts by mass and less than 10.0 parts by mass with respect to 100 parts by mass of the rubber component.

(b-10) Other

In addition to the above components, the coating rubber composition may further contain additives commonly used in the tire industry, such as fatty acid metal salts, carboxylic acid metal salts, and organic peroxides. Content of these additives is, for example, more than 0.1 parts by mass and less than 200 parts by mass with respect to 100 parts by mass of the rubber component.

(2) Manufacture of belt layers

(a) Production of coating rubber composition

The coating rubber composition can be produced through a base kneading step and a finish kneading step in the same manner as in the production of the tread rubber composition described above.

(b) Manufacture of belt layers

The coating rubber composition thus obtained is coated on both sides of steel cords arranged at predetermined ends using a calender roll or the like and molded to produce a belt layer.

3. Manufacture of tire

Components such as belt layers and tread portions are molded using known methods. An unvulcanized tire can be manufactured by molding the molded belt layer and tread portion together with other tire members on a tire molding machine according to a normal method.
Specifically, an inner liner, which are members for ensuring the airtightness of the tire, a carcass, a belt layer, and the like are wound on the molding drum, both ends of the carcass are fixed to both side edges, and the bead portion as a member for fixing the tire to the rim is placed and it is formed into a toroid shape. Then, the tread is attached to the center of the outer periphery and the sidewall is attached to the radially outer side to form the side portion to produce an unvulcanized tire.
Thereafter, the tire is obtained by heating and pressurizing the produced unvulcanized tire in a vulcanizer. The vulcanization step can be carried out by applying known vulcanization means. The vulcanization temperature is, for example, more than 120 °C and less than 200 °C, and the vulcanization time is, for example, more than 5 minutes and less than 15 minutes.

[EXAMPLE]

Hereinafter, the present invention will be described in more detail with reference to examples. In the following, motorcycle tires (for rear wheels) having a tire size of 190/50ZR17 and the structure shown in FIG. 1 were manufactured, and steering stability during high-speed turning was evaluated.

1. Fabrication of belt layer

First, a belt layer was produced according to the following procedure.

(1) Production of coated rubber composition

First, a coated rubber composition was produced.
Specifically, 100 parts by mass of NR (RSS3), 55 parts by mass of carbon black (Show Black N550: N2SA = 42 m2/g manufactured by Cabot Japan Co., Ltd.), 5 parts by mass of curable resin component (Sumikanol 620 manufactured by Taoka Chemical Co., Ltd.: modified resorcinol resin)), 3 parts by mass of curing agent (Sumikanol 507 manufactured by Taoka Chemical Co., Ltd.: methylene donor), 1 part by mass of organic acid cobalt (DICNATE NBC-2 manufactured by DIC

Corporation : Cobalt boron neodecanoate, cobalt content 22.5 % by mass), 11 parts by mass of zinc oxide (zinc white No. 1 manufactured by Mitsui Metal Mining Co., Ltd.), 1 part by mass of anti-aging agent -1 (Nocrac 6C manufactured by Ouchi Shinko Chemical Industry Co., Ltd.: N-phenyl-N '-(1,3-dimethylbutyl)-p-phenylenediamine), 0.5 part by mass of anti-aging agent -2 (Antage RD manufactured by Kawaguchi Chemical Industry Co., Ltd.: 2,2,4-trimethyl-1,2-dihydroquinoline), 1 part by mass of stearic acid (stearic acid "Tsubaki" manufactured by NOF Co., Ltd.), 7 parts by mass of sulfur (Powdered sulfur manufactured by Tsurumi Chemical Industry Co., Ltd.), and 1.2 parts by mass of vulcanization accelerator (Nocceler DZ manufactured by Ouchi Shinko Chemical Industry Co., Ltd.: N, N-dicyclohexyl-2-benzothiazolylsulfenamide) were prepared. Using a Banbury mixer, the above materials other than sulfur and a vulcanization accelerator were kneaded at 150 °C for 5 minutes to obtain a kneaded product.

Next, sulfur and a vulcanization accelerator were added to the resulting kneaded product, and the mixture was kneaded for 5 minutes at 80 °C using an open roll to obtain a coated rubber composition.

(2) Production of belt layer

The steel cords having the cord configurations shown in Tables 2 to 5 were arranged so as to form ends of 25 cords/5 cm. The coated rubber composition obtained above was applied to the top and bottom of the cords so that the total thickness became 1.15 mm to obtain each belt layer.

In addition, the presence or absence of a buckling point, the compression stiffness value, and the bending stiffness value of each steel cord were measured in advance according to the above-described method. The measurement results are shown in Tables 2-5.

2. Manufacture of tread rubber composition

Next, according to the following procedure, a tread rubber composition was produced and then molded into a tread rubber.

(1) Compounding material

First, each compounding material shown below was prepared.

(a) rubber component

(a-1) SBR: Tafden 3830 manufactured by Asahi Kasei Corporation (S-SBR: styrene content: 33% by mass, vinyl bond content: 31% by mass, 37.5% oil extended product)
(a-2) BR: Ubepol BR150B manufactured by Ube Industries, Ltd. (Hi-cis BR synthesized using a Co-based catalyst: cis content 97% by mass, trans content 2% by mass, vinyl content 1% by mass)

(b) Compounding materials other than rubber components

(b-1) Carbon black: Show Black N110 manufactured by Cabot Japan Co., Ltd. (BET value 142 $m^2$/g)
(b-2) Silica: Ultrasil VN3 manufactured by Evonik Industries
(BET specific surface area: 175 $m^2$/g)
(b-3) Silane coupling agent: Silane coupling agent Si69 manufactured by Evonik Industries
(b-4) Oil: Diana Process NH-70 manufactured by Idemitsu Kosan Co., Ltd.
(b-5) Wax: Ozoace 0355 manufactured by Nippon Seiro Co., Ltd.
(b-6) Resin: Syltraxx4401 manufactured by Arizona Chemical Co. ($\alpha$-methylstyrene resin, softening point 85°C)
(b-7) Liquid SBR: RICON 100 manufactured by Cray Valley (random copolymer, styrene content: 25% by mass, vinyl content: 70%, Mn: 4500)
(b-8) Anti-aging agent: Antigen 6C manufactured by Sumitomo Chemical Co., Ltd. (N-(1,3-dimethylbutyl)-N'-phenyl-p-phenylenediamine)
(b-9) Stearic acid: bead stearic acid "Tsubaki" manufactured by NOF Corporation
(b-10) Zinc oxide: "Ginrei R" manufactured by Toho Zinc Co., Ltd.
(b-11) Sulfur: HK-200-5 manufactured by Hosoi Chemical Industry Co., Ltd. (5% oil-containing powdered sulfur)
(b-12) Vulcanization accelerator: Nocceler-NS manufactured by Ouchi Shinko Chemical Industry Co., Ltd. (N-tert-butyl-2-benzothiazolylsulfenamide)

(2) Production of tread rubber composition

Using a Banbury mixer, materials other than sulfur and a vulcanization accelerator were kneaded at 150 °C for 5 minutes according to the contents of formulations A to E shown in Table 1 to obtain kneaded materials. Each compounding quantity is a mass part.

Thereafter, using each of the obtained tread rubber compositions, a vulcanized rubber piece having a length of 40 mm and a width of 4 mm was produced as a rubber test piece for viscoelasticity measurement. Then, for each of the obtained rubber test pieces for viscoelasticity measurement, using Eplexor manufactured by GABO, the complex elastic modulus E* (MPa) was measured under the conditions of temperature: 70 °C, initial strain: 5%, dynamic strain: ± 1%, frequency: 10 Hz, and deformation mode: extension. The measurement results are shown in Table 1 and Tables 2-5.

[Table 1]

| | Formulation | | | | |
|---|---|---|---|---|---|
| | A | B | C | D | E |
| SBR | 82.50 | 82.50 | 82.50 | 82.50 | 82.50 |
| BR | 40.00 | 40.00 | 40.00 | 40.00 | 40.00 |
| Carbon black | 75.00 | 75.00 | 50.00 | 75.00 | - |
| Silica | - | - | 60.00 | - | 100.00 |
| Silane coupling agent | - | - | 4.80 | - | 8.00 |
| Oil | 30.00 | 10.00 | 10.00 | - | 5.00 |
| Resin | 15.00 | 15.00 | 15.00 | 15.00 | 15.00 |
| Liquid rubber | - | - | - | 10.00 | 10.00 |
| Wax | 1.00 | 1.00 | 1.00 | 1.00 | 1.00 |
| Anti-aging agent | 1.00 | 1.00 | 1.00 | 1.00 | 1.00 |
| Stearic acid | 2.00 | 2.00 | 2.00 | 2.00 | 2.00 |
| Zinc oxide | 2.00 | 2.00 | 2.00 | 2.00 | 2.00 |
| Sulfur | 1.50 | 1.50 | 1.50 | 1.50 | 1.50 |
| Vulcanization accelerator | 1.50 | 1.50 | 1.50 | 1.50 | 1.50 |
| Complex elastic modulus E*(MPa) | 4.8 | 6.6 | 9.8 | 6.0 | 5.9 |

(3) Manufacture of tread rubber

Each tread rubber composition thus obtained was then extruded into a predetermined shape to produce a tread rubber.

3. Manufacture of tires

The belt layer and tread rubber obtained above are pasted together with other tire members to form an unvulcanized tire, and press-vulcanized for 10 minutes at 170°C to manufacture test tires of Examples 1 to 12 and test tires of Comparative Examples 1 to 10 shown in Tables 4 and 5.

4. Calculation of parameters

Along with the manufacturing of the tires described above, as a parameter for evaluation, the product (S × E*) of the total cross-sectional area S ($mm^2$) of steel filaments in the cross section of each steel cord and each complex elastic modulus E* (MPa); and the product (FR × E*) of the bending stiffness value FR of each steel cord and each complex elastic modulus E* (MPa) were obtained. Also, the ratio (L2/L1) of the tire width direction length L2 (mm) of the tire radially outer belt layer to the tire width direction length L1 (mm) of the tire radially inner belt layer was determined. Also, the ratio (Lm/Tw)

of the maximum length Lm (mm) of the belt layer in the tire width direction to the tread width Tw (mm) was determined. The results are shown in Tables 2-5.

5. Performance evaluation test (evaluation of steering stability during high-speed turning)

Each test tire was installed on a rim (MT6.00×17), and installed on the rear wheel of a large motorcycle (1000 cc) under the condition of an internal pressure of 200 kPa; and actually run on a dry asphalt tire test course. Then, the driver sensorily evaluated the change in handling performance when changing lanes while running at 120 km/h on a scale of 1 (perceived a significant change) to 5 (almost no change). Then, the total points of the evaluations by the 20 drivers were calculated.

Next, taking the result in Example 1 as 100, it was indexed based on the following formula to evaluate steering stability during high-speed turning. A larger value indicates better steering stability during high-speed turning.

$$\text{Steering stability} = [(\text{result of test tire}) / (\text{result of Example 1})] \times 100$$

[Table 2]

| Example No. | | Example | | | | | | |
|---|---|---|---|---|---|---|---|---|
| | | 1 | 2 | 3 | 4 | 5 | 6 | 7 |
| Configuration of steel cord | m | 2 | 2 | 2 | 1 | 1 | 1 | 2 |
| | n | 2 | 3 | 3 | 2 | 6 | 4 | 2 |
| | Diameter of filament (mm) | 0.25 | 0.25 | 0.21 | 0.25 | 0.17 | 0.21 | 0.21 |
| Physical properties of tread rubber | Formulation | C | B | B | B | B | B | B |
| | E*(Mpa) | 9.8 | 6.6 | 6.6 | 6.6 | 6.6 | 6.6 | 6.6 |
| | Total cross-sectional area of filament S($mm^2$) | 0.20 | 0.29 | 0.21 | 0.10 | 0.14 | 0.14 | 0.14 |
| | S×E* | 1.96 | 1.91 | 1.39 | 0.66 | 0.92 | 0.92 | 0.92 |
| Physical properties of steel cord | Buckling point | have | have | have | have | none | none | none |
| | Compression stiffness (N/mm) | 96 | 96 | 79 | 40 | 56 | 56 | 64 |
| | Bending stiffness FR(×$10^{-3}$ N·m) | 2.53 | 3.25 | 1.67 | 1.09 | 0.74 | 1.11 | 1.11 |
| | FR×E* (×$10^{-3}$ MPa·N·m) | 24.8 | 21.5 | 11.0 | 7.2 | 4.9 | 7.3 | 7.3 |
| Structure of tire | Tread width Tw (mm) | 186 | 186 | 186 | 186 | 186 | 186 | 186 |
| | Length of inner belt layer L1 (mm) | 192 | 192 | 192 | 192 | 192 | 192 | 192 |
| | Length of outer belt layer L2 (mm) | 190 | 190 | 190 | 190 | 190 | 190 | 190 |
| | L2/L1 | 0.99 | 0.99 | 0.99 | 0.99 | 0.99 | 0.99 | 0.99 |
| | Lm/Tw | 1.03 | 1.03 | 1.03 | 1.03 | 1.03 | 1.03 | 1.03 |
| Steering stability at high-speed turning | | 100 | 104 | 108 | 110 | 114 | 118 | 122 |

[Table 3]

| Example No. | | Example | | | | | | |
|---|---|---|---|---|---|---|---|---|
| | | 8 | 9 | 10 | 11 | 12 | 13 | 14 |
| Configuration of steel cord | m | 2 | 3 | 3 | 3 | 3 | 3 | 3 |
| | n | 3 | 3 | 3 | 3 | 3 | 3 | 3 |
| | Diameter of filament (mm) | 0.17 | 0.19 | 0.17 | 0.17 | 0.17 | 0.17 | 0.17 |

(continued)

| Example No. | | Example | | | | | | |
|---|---|---|---|---|---|---|---|---|
| | | 8 | 9 | 10 | 11 | 12 | 13 | 14 |
| Physical properties of tread rubber | Formulation | B | B | B | D | E | E | E |
| | E*(Mpa) | 6.6 | 6.6 | 6.6 | 6.0 | 5.9 | 5.9 | 5.9 |
| | Total cross-sectional area of filament S($mm^2$) | 0.14 | 0.26 | 0.20 | 0.20 | 0.20 | 0.20 | 0.20 |
| | S×E* | 0.92 | 1.72 | 1.32 | 1.20 | 1.18 | 1.18 | 1.18 |
| Physical properties of steel cord | Buckling point | none | none | none | none | none | none | none |
| | Compression stiffness (N/mm) | 48 | 65 | 63 | 63 | 63 | 63 | 63 |
| | Bending stiffness FR($\times 10^{-3}$ N·m) | 0.75 | 1.14 | 1.12 | 1.12 | 1.12 | 1.12 | 1.12 |
| | FR×E* ($\times 10^{-3}$ MPa·N·m) | 5.0 | 7.5 | 7.4 | 6.7 | 6.6 | 6.6 | 6.6 |
| Structure of tire | Tread width Tw (mm) | 186 | 186 | 186 | 186 | 186 | 186 | 186 |
| | Length of inner belt layer L1 (mm) | 192 | 192 | 192 | 192 | 192 | 190 | 190 |
| | Length of outer belt layer L2 (mm) | 190 | 190 | 190 | 190 | 190 | 192 | 203 |
| | L2/L1 | 0.99 | 0.99 | 0.99 | 0.99 | 0.99 | 1.01 | 1.07 |
| | Lm/Tw | 1.03 | 1.03 | 1.03 | 1.03 | 1.03 | 1.03 | 1.09 |
| Steering stability at high-speed turning | | 118 | 122 | 128 | 134 | 136 | 138 | 144 |

[Table 4]

| Comparative example No. | | Comparative example | | | | |
|---|---|---|---|---|---|---|
| | | 1 | 2 | 3 | 4 | 5 |
| Configuration of steel cord | m | 1 | 2 | 2 | 2 | 2 |
| | n | 8 | 4 | 5 | 4 | 3 |
| | Diameter of filament (mm) | 0.27 | 0.27 | 0.25 | 0.27 | 0.30 |
| Physical properties of tread rubber | Formulation | A | A | A | B | A |
| | E*(Mpa) | 4.8 | 4.8 | 4.8 | 6.6 | 4.8 |
| | Total cross-sectional area of filament S($mm^2$) | 0.46 | 0.46 | 0.49 | 0.46 | 0.42 |
| | S×E* | 2.21 | 2.21 | 2.36 | 3.04 | 2.02 |
| Physical properties of steel cord | Buckling point | have | have | have | have | have |
| | Compression stiffness (N/mm) | 189 | 135 | 108 | 107 | 108 |
| | Bending stiffness FR($\times 10^{-3}$ N·m) | 6.00 | 5.86 | 5.43 | 5.86 | 6.62 |
| | FR×E* ($\times 10^{-3}$ MPa·N·m) | 28.8 | 28.1 | 26.1 | 38.7 | 31.8 |
| Structure of tire | Tread width Tw (mm) | 186 | 186 | 186 | 186 | 186 |
| | Length of inner belt layer L1 (mm) | 192 | 192 | 192 | 192 | 192 |
| | Length of outer belt layer L2 (mm) | 190 | 190 | 190 | 190 | 190 |
| | L2/L1 | 0.99 | 0.99 | 0.99 | 0.99 | 0.99 |
| | Lm/Tw | 1.03 | 1.03 | 1.03 | 1.03 | 1.03 |
| Steering stability at high-speed turning | | 75 | 75 | 85 | 80 | 87 |

[Table 5]

| Comparative example No. | | Comparative example | | | | |
|---|---|---|---|---|---|---|
| | | 6 | 7 | 8 | 9 | 10 |
| Configuration of steel cord | m | 3 | 1 | 3 | 1 | 3 |
| | n | 10 | 7 | 6 | 6 | 5 |
| | Diameter of filament (mm) | 0.14 | 0.22 | 0.14 | 0.17 | 0.17 |
| Physical properties of tread rubber | Formulation | A | B | B | A | B |
| | E*(Mpa) | 4.8 | 6.6 | 6.6 | 4.8 | 6.6 |
| | Total cross-sectional area of filament S($mm^2$) | 0.46 | 0.27 | 0.28 | 0.14 | 0.34 |
| | S×E* | 2.21 | 1.78 | 1.85 | 0.67 | 2.24 |
| Physical properties of steel cord | Buckling point | none | none | none | none | none |
| | Compression stiffness (N/mm) | 61 | 65 | 38 | 56 | 64 |
| | Bending stiffness FR($\times 10^{-3}$ N·m) | 1.82 | 2.32 | 1.10 | 0.75 | 1.87 |
| | FR×E* ($\times 10^{-3}$ MPa·N·m) | 8.7 | 15.3 | 7.3 | 3.6 | 12.3 |
| Structure of tire | Tread width Tw (mm) | 186 | 186 | 186 | 186 | 186 |
| | Length of inner belt layer L1 (mm) | 192 | 192 | 192 | 192 | 192 |
| | Length of outer belt layer L2 (mm) | 190 | 190 | 190 | 190 | 190 |
| | L2/L1 | 0.99 | 0.99 | 0.99 | 0.99 | 0.99 |
| | Lm/Tw | 1.03 | 1.03 | 1.03 | 1.03 | 1.03 |
| Steering stability at high-speed turning | | 91 | 97 | 98 | 99 | 98 |

[Explanation of numerical signs]

| | |
|---|---|
| 1 | Tire |
| 2 | Tread |
| 3 | Side wall portion |
| 4 | Bead portion |
| 5 | Bead core |
| 6 | Carcass |
| 6a | Ply body |
| 6b | Ply turn-up portion |
| 7 | Belt layer |
| 8 | Bead apex rubber |
| 9 | Belt reinforcement layer |
| 10 | Steel cord |
| 12 | Strands |

| | |
|---|---|
| C | Tire equator |
| F | Steel filament |
| G | Coated rubber |
| IN | inner area |
| K0 | Correction sample |
| K1 to K3 | Measurement sample |
| OUT | outer area |
| Te | Tread edge |
| Tw | Tread width |

**Claims**

1. A motorcycle tire (1) comprising

   a carcass (6) extending from a tread portion (2) to a bead core (5) of a bead portion (4) via a sidewall portion (3), and a belt layer (7) arranged outside the carcass (6) and inside the tread portion (2) in the tire radial direction, wherein
   the belt layer (7) is a steel belt layer (7) having steel cords (10);
   the steel cord (10) is a steel cord (10) having an m × n configuration in which n strands (12), formed by twisting m steel filaments (F), are twisted together in the same direction as the steel filaments (F), and the m is 1 or more and 3 or less and n is 2 or more and 6 or less;
   the diameter of the steel filament (F) is 0.15 mm or more and 0.25 mm or less;
   **characterized in that**
   the rubber composition forming the tread portion (2) is a rubber composition having a complex elastic modulus E* (MPa) of 5.0 MPa or more, measured under the conditions of 70°C, initial strain of 5%, dynamic strain rate of 1%, frequency of 10 Hz, and deformation mode: extension; and
   the product (S × E*) of the total cross-sectional area S($mm^2$) of the steel filaments (F) in the cross section of the steel cord (10) and the complex elastic modulus E* (MPa) is 2.00 N or less.

2. The motorcycle tire (1) according to Claim 1, wherein the complex elastic modulus E* (MPa) is 6.5 MPa or more.

3. The motorcycle tire (1) according to Claim 1 or 2, wherein (S × E*) is less than 1.70 N.

4. The motorcycle tire (1) according to any one of Claims 1-3, wherein the steel cord (10) has a compression stiffness value of 65 N/mm or less.

5. The motorcycle tire (1) according to any one of Claims 1-4, wherein the steel cord (10) is a steel cord (10) having no buckling point in the sense of that in a graph showing the relationship between the slope (N/mm), when measuring the compression stiffness and the amount of compression (mm), a difference between a maximum value (CSmax) of the slope and the minimum value (CSmin) of the subsequent slope is 200 N/mm or less.

6. The motorcycle tire (1) according to any one of Claims 1-5, wherein the bending stiffness value (FR) of the steel cord (10) is $2.5\times10^{-3}$ Nm or less, wherein the bending stiffness is determined by

   - attaching both ends of a steel cord having a length of 145 mm to clamps of a rigidity tester,
   - giving the steel cord (10) bending angles of +15 degrees and -15, and
   - defining an average value of the bending moment at +15 degrees and the bending moment at -15 degrees as the bending stiffness value (FR) in (Nm).

7. The motorcycle tire (1) according to Claim 6, wherein the bending stiffness value (FR) of the steel cord (10) is $2.0\times10^{-3}$

Nm or less.

8. The motorcycle tire (1) according to Claim 7, wherein the bending stiffness value (FR) of the steel cord (10) is $1.5\times10^{-3}$ Nm or less.

9. The motorcycle tire (1) according to any one of Claims 1-8, wherein the product (FR $\times$ E*) of the bending stiffness value (FR) and the complex elastic modulus E* (MPa) of the steel cord (10) is 25 $\times$ $10^{-3}$ (MPa·N·m) or less.

10. The motorcycle tire (1) according to Claim 9, wherein the (FR $\times$ E*) is 15 $\times$ $10^{-3}$ (MPa·N·m) or less.

11. The motorcycle tire (1) according to Claim 10, wherein the (FR $\times$ E*) is 10 $\times$ $10^{-3}$ (MPa·N·m) or less.

12. The motorcycle tire (1) according to any one of Claims 1-11, wherein organic acid cobalt is contained in the coating rubber (G) of the belt layer (7).

13. The motorcycle tire (1) according to Claim 12, wherein content of the organic acid cobalt is 0.05 parts by mass or more in terms of cobalt with respect to 100 parts by mass of the rubber component.

14. The motorcycle tire (1) according to any one of Claims 1-13, wherein the belt layer (7) is multi-layered; and an average distance D (mm) between steel cords (10) in at least one pair of belt layers (7) adjacent to each other in the tire radial direction of the multi-layered belt layer (7) tire is 0.6 mm or less.

15. The motorcycle tire (1) according to any one of Claims 1-13, wherein the belt layer (7) is multi-layered; and the angle formed by the steel cords (10) in each belt layer (7) in the tread portion (2) in at least one pair of belt layers (7) adjacent to each other in the tire radial direction of the multi-layered belt layers (7) is 65° or less with respect to the tire circumferential direction.

16. The motorcycle tire (1) according to Claim 15, wherein the steel cords (10) in the belt layers (7) form an angle of 60° or less with respect to the tire circumferential direction.

17. The motorcycle tire (1) according to any one of Claims 1-16, wherein the belt layer (7) is multi-layered; and, in belt layers (7) adjacent to each other, the ratio (L2/L1) of the tire width direction length L2 (mm) of the tire radially outer belt layer (7) to the tire width direction length L1 (mm) of the tire radially inner belt (7) layer is more than 1.00.

18. The motorcycle tire (1) according to any one of Claims 1-17, wherein the rubber composition of the tread portion (2) contains 25% by mass or less of styrene in the rubber component and has a glass transition temperature (Tg) of -18°C or higher.

19. The motorcycle tire (1) according to any one of Claims 1-18, wherein the tread portion (2) is divided in the tire width direction into an inner region (IN) and an outer region (OUT) sandwiching the inner region (IN).

20. The motorcycle tire (1) according to Claim 19, wherein the rubber composition constituting the outer region (OUT) of the tread portion (2) contains 25% by mass or less of styrene in the rubber component and has a glass transition temperature (Tg) of -18°C or higher.

21. The motorcycle tire (1) according to any one of Claims 1-20, wherein the ratio (Lm/Tw) of the maximum length Lm (mm) of the belt layer (7) in the tire width direction to the tread width (Tw) (mm) is 1.00 or more.

## Patentansprüche

1. Motorradreifen (1), umfassend

eine Karkasse (6), die sich von einem Laufflächenabschnitt (2) über einen Seitenwandabschnitt (3) zu einem Wulstkern (5) eines Wulstabschnitts (4) erstreckt, und eine Gürtellage (7), die in der Reifenradialrichtung außen von der Karkasse (6) und innen von dem Laufflächenabschnitt (2) angeordnet ist, wobei
die Gürtellage (7) eine Stahlgürtellage (7) mit Stahlkorden (10) ist;
der Stahlkord (10) ein Stahlkord (10) mit einer m x n-Konfiguration ist, bei der n Stränge (12), die durch Verdrehen

von m Stahlfilamenten (F) gebildet sind, in der gleichen Richtung wie die Stahlfilamente (F) miteinander verdreht sind, und m 1 oder mehr und 3 oder weniger ist und n 2 oder mehr und 6 oder weniger ist;
der Durchmesser des Stahlfilaments (F) 0,15 mm oder mehr und 0,25 mm oder weniger beträgt;
**dadurch gekennzeichnet, dass**
die Gummizusammensetzung, die den Laufflächenabschnitt (2) bildet, eine Gummizusammensetzung mit einem komplexen Elastizitätsmodul E* (MPa) von 5,0 MPa oder mehr ist, gemessen unter den Bedingungen von 70 °C, Anfangsdehnung von 5 %, dynamischer Dehnungsrate von 1 %, Frequenz von 10 Hz und Verformungsmodus: Dehnung; und
das Produkt (S x E*) der Gesamtquerschnittsfläche S($mm^2$) der Stahlfilamente (F) im Querschnitt des Stahlkords (10) und des komplexen Elastizitätsmoduls E* (MPa) 2,00 N oder weniger beträgt.

2. Motorradreifen (1) nach Anspruch 1, wobei der komplexe Elastizitätsmodul E* (MPa) 6,5 MPa oder mehr beträgt.

3. Motorradreifen (1) nach Anspruch 1 oder 2, wobei (S x E*) weniger als 1,70 N beträgt.

4. Motorradreifen (1) nach einem der Ansprüche 1 bis 3, wobei der Stahlkord (10) einen Kompressionssteifigkeitswert von 65 N/mm oder weniger aufweist.

5. Motorradreifen (1) nach einem der Ansprüche 1 bis 4, wobei der Stahlkord (10) ein Stahlkord (10) ist, der keinen Knickpunkt in dem Sinne aufweist, dass in einem Graphen, der die Beziehung zwischen der Steigung (N/mm) zeigt, wenn die Kompressionssteifigkeit und der Kompressionsbetrag (mm) gemessen werden, eine Differenz zwischen einem Maximalwert (CSmax) der Steigung und dem Minimalwert (CSmin) der nachfolgenden Steigung 200 N/mm oder weniger ist.

6. Motorradreifen (1) nach einem der Ansprüche 1 bis 5, wobei der Biegesteifigkeitswert (FR) des Stahlkords (10) 2,5 x $10^{-3}$ Nm oder weniger ist, wobei die Biegesteifigkeit bestimmt wird, indem

- beide Enden eines Stahlkords mit einer Länge von 145 mm an Klemmen eines Steifigkeitsprüfers angebracht werden,
- dem Stahlkord (10) Biegewinkel von +15 Grad und -15 Grad verliehen werden, und
- ein Mittelwert des Biegemoments bei +15 Grad und des Biegemoments bei -15 Grad als Biegesteifigkeitswert (FR) in (Nm) definiert wird.

7. Motorradreifen (1) nach Anspruch 6, wobei der Biegesteifigkeitswert (FR) des Stahlkords (10) 2,0 x $10^{-3}$ Nm oder weniger beträgt.

8. Motorradreifen (1) nach Anspruch 7, wobei der Biegesteifigkeitswert (FR) des Stahlkords (10) 1,5 x $10^{-3}$ Nm oder weniger beträgt.

9. Motorradreifen (1) nach einem der Ansprüche 1 bis 8, wobei das Produkt (FR x E*) des Biegesteifigkeitswerts (FR) und des komplexen Elastizitätsmoduls E* (MPa) des Stahlkords (10) 25 x $10^{-3}$ (MPa·N·m) oder weniger beträgt.

10. Motorradreifen (1) nach Anspruch 9, wobei (FR x E*) 15 x $10^{-3}$ (MPa·N·m) oder weniger beträgt.

11. Motorradreifen (1) nach Anspruch 10, wobei (FR x E*) 10 x $10^{-3}$ (MPa·N·m) oder weniger beträgt.

12. Motorradreifen (1) nach einem der Ansprüche 1-11, wobei Kobaltsalz organischer Säure (organic acid cobalt) in dem Beschichtungsgummi (G) der Gürtellage (7) enthalten ist.

13. Motorradreifen (1) nach Anspruch 12, wobei der Gehalt des Kobaltsalzes organischer Säure 0,05 Massenteile oder mehr, ausgedrückt als Kobalt, in Bezug auf 100 Massenteile der Kautschukkomponente beträgt.

14. Motorradreifen (1) nach einem der Ansprüche 1-13, wobei die Gürtellage (7) mehrlagig ist; und ein mittlerer Abstand D (mm) zwischen Stahlkorden (10) in mindestens einem Paar Gürtellagen (7), die in der Reifenradialrichtung des Reifens mit der mehrlagigen Gürtellage (7) benachbart zueinander sind, 0,6 mm oder weniger beträgt.

15. Motorradreifen (1) nach einem der Ansprüche 1-13, wobei die Gürtellage (7) mehrlagig ist; und der Winkel, der durch die Stahlkorde (10) in jeder Gürtellage (7) in dem Laufflächenabschnitt (2) in mindestens einem Paar Gürtellagen (7),

die in der Reifenradialrichtung der mehrlagigen Gürtellagen (7) benachbart zueinander sind, gebildet ist, 65° oder weniger in Bezug auf die Umfangsrichtung des Reifens beträgt.

**16.** Motorradreifen (1) nach Anspruch 15, wobei die Stahlkorde (10) in den Gürtellagen (7) einen Winkel von 60° oder weniger in Bezug auf die Reifenumfangsrichtung bilden.

**17.** Motorradreifen (1) nach einem der Ansprüche 1-16, wobei die Gürtellage (7) mehrlagig ist; und in Gürtellagen (7), die benachbart zueinander sind, das Verhältnis (L2/L1) der Länge L2 (mm) in Richtung der Reifenbreite der radial äußeren Gürtellage (7) des Reifens zu der Länge L1 (mm) in Richtung der Reifenbreite der radial inneren Gürtellage (7) des Reifens mehr als 1,00 beträgt.

**18.** Motorradreifen (1) nach einem der Ansprüche 1-17, wobei die Gummizusammensetzung des Laufflächenabschnitts (2) 25 Massenprozent oder weniger Styrol in der Kautschukkomponente enthält und eine Glasübergangstemperatur (Tg) von -18 °C oder höher aufweist.

**19.** Motorradreifen (1) nach einem der Ansprüche 1-18, wobei der Laufflächenabschnitt (2) in Richtung der Reifenbreite in einen Innenbereich (IN) und einen Außenbereich (OUT), der den Innenbereich (IN) sandwichartig umgibt, unterteilt ist.

**20.** Motorradreifen (1) nach Anspruch 19, wobei die Gummizusammensetzung, die den Außenbereich (OUT) des Laufflächenabschnitts (2) bildet, 25 Massenprozent oder weniger Styrol in der Kautschukkomponente enthält und eine Glasübergangstemperatur (Tg) von -18 °C oder höher aufweist.

**21.** Motorradreifen (1) nach einem der Ansprüche 1-20, wobei das Verhältnis (Lm/Tw) der Maximallänge Lm (mm) der Gürtellage (7) in Richtung der Reifenbreite zu der Laufflächenbreite (Tw) (mm) 1,00 oder mehr beträgt.

## Revendications

**1.** Pneu de motocyclette (1) comprenant :

une carcasse (6) s'étendant depuis une partie bande de roulement (2) jusqu'à une tringle (5) d'une partie talon (4) via une partie flanc (3), et une couche de ceinture (7) disposée à l'extérieur de la carcasse (6) et à l'intérieur de la partie bande de roulement (2) dans la direction radiale du pneu, dans lequel
la couche de ceinture (7) est une couche de ceinture en acier (7) comportant des câbles en acier (10) ;
le câble en acier (10) est un câble en acier (10) ayant une configuration m x n dans laquelle n brins (12), formés en torsadant m filaments en acier (F), sont torsadés ensemble dans la même direction que les filaments en acier (F), et m est égal à 1 ou plus et à 3 ou moins, et n est égal à 2 ou plus et à 6 ou moins ;
le diamètre du filament en acier (F) est de 0,15 mm ou plus et de 0,25 mm ou moins ;
**caractérisé en ce que**
la composition de caoutchouc formant la partie bande de roulement (2) est une composition de caoutchouc ayant un module d'élasticité complexe E* (MPa) de 5,0 MPa ou plus, mesuré dans les conditions suivantes : 70 °C, déformation initiale de 5 %, vitesse de déformation dynamique de 1 %, fréquence de 10 Hz et mode de déformation : extension ; et
le produit (S x E*) de la surface de section transversale totale S ($mm^2$) des filaments en acier (F) dans la section transversale du câble en acier (10) et du module d'élasticité complexe E* (MPa) est de 2,00 N ou moins.

**2.** Pneu de motocyclette (1) selon la revendication 1, dans lequel le module d'élasticité complexe E* (MPa) est de 6,5 MPa ou plus.

**3.** Pneu de motocyclette (1) selon la revendication 1 ou 2, dans lequel (S x E*) est inférieur à 1,70 N.

**4.** Pneu de motocyclette (1) selon l'une quelconque des revendications 1 à 3, dans lequel le câble en acier (10) a une valeur de rigidité à la compression de 65 N/mm ou moins.

**5.** Pneu de motocyclette (1) selon l'une quelconque des revendications 1 à 4, dans lequel le câble en acier (10) est un câble en acier (10) ne présentant aucun point de flambage au sens où, dans un graphique représentant la relation entre la pente (N/mm), lors de la mesure de la rigidité à la compression, et la quantité de compression (mm), une

différence entre une valeur maximale (CSmax) de la pente et la valeur minimale (CSmin) de la pente suivante est de 200 N/mm ou moins.

6. Pneu de motocyclette (1) selon l'une quelconque des revendications 1 à 5, dans lequel la valeur de rigidité en flexion (FR) du câble en acier (10) est de 2,5 x $10^{-3}$ Nm ou moins, la rigidité en flexion étant déterminée en

   - attachant les deux extrémités d'un câble en acier d'une longueur de 145 mm à des pinces d'un appareil de mesure de rigidité,
   - appliquant au câble en acier (10) des angles de flexion de +15 degrés et -15 degrés, et
   - définissant une valeur moyenne du moment de flexion à +15 degrés et du moment de flexion à -15 degrés comme valeur de rigidité à la flexion (FR) en (Nm).

7. Pneu de motocyclette (1) selon la revendication 6, dans lequel la valeur de rigidité en flexion (FR) du câble en acier (10) est de 2,0 x $10^{-3}$ Nm ou moins.

8. Pneu de motocyclette (1) selon la revendication 7, dans lequel la valeur de rigidité en flexion (FR) du câble en acier (10) est de 1,5 x $10^{-3}$ Nm ou moins.

9. Pneu de motocyclette (1) selon l'une quelconque des revendications 1 à 8, dans lequel le produit (FR x E*) de la valeur de rigidité en flexion (FR) et du module d'élasticité complexe E* (MPa) du câble en acier (10) est de 25 x $10^{-3}$ (MPa·Nm) ou moins.

10. Pneu de motocyclette (1) selon la revendication 9, dans lequel le produit (FR x E*) est de 15 x $10^{-3}$ (MPa·Nm) ou moins.

11. Pneu de motocyclette (1) selon la revendication 10, dans lequel le produit (FR x E*) est de 10 x $10^{-3}$ (MPa·Nm) ou moins.

12. Pneu de motocyclette (1) selon l'une quelconque des revendications 1 à 11, dans lequel du cobalt d'acide organique est contenu dans le caoutchouc de revêtement (G) de la couche de ceinture (7).

13. Pneu de motocyclette (1) selon la revendication 12, dans lequel la teneur en cobalt d'acide organique est de 0,05 partie en masse ou plus en termes de cobalt par rapport à 100 parties en masse du composé de caoutchouc.

14. Pneu de motocyclette (1) selon l'une quelconque des revendications 1 à 13, dans lequel la couche de ceinture (7) est multicouche ; et une distance moyenne D (mm) entre les câbles en acier (10) dans au moins une paire de couches de ceinture (7) adjacentes l'une à l'autre dans la direction radiale du pneu à couche de ceinture multicouche (7) est de 0,6 mm ou moins.

15. Pneu de motocyclette (1) selon l'une quelconque des revendications 1 à 13, dans lequel la couche de ceinture (7) est multicouche ; et l'angle formé par les câbles en acier (10) dans chaque couche de ceinture (7) dans la partie bande de roulement (2) dans au moins une paire de couches de ceinture (7) adjacentes l'une à l'autre dans la direction radiale du pneu des couches de ceinture multicouches (7) est de 65° ou moins par rapport à la direction circonférentielle du pneu.

16. Pneu de motocyclette (1) selon la revendication 15, dans lequel les câbles en acier (10) dans les couches de ceinture (7) forment un angle de 60° ou moins par rapport à la direction circonférentielle du pneu.

17. Pneu de motocyclette (1) selon l'une quelconque des revendications 1 à 16, dans lequel la couche de ceinture (7) est multicouche ; et, dans les couches de ceinture (7) adjacentes les unes aux autres, le rapport (L2/L1) entre la longueur L2 (mm) dans la direction de largeur du pneu de la couche de ceinture radialement extérieure (7) et la longueur L1 (mm) dans la direction de largeur du pneu de la couche de ceinture radialement intérieure (7) est supérieur à 1,00.

18. Pneu de motocyclette (1) selon l'une quelconque des revendications 1 à 17, dans lequel la composition de caoutchouc de la partie bande de roulement (2) contient 25 % en masse ou moins de styrène dans le composé de caoutchouc et a une température de transition vitreuse (Tg) de -18 °C ou plus.

19. Pneu de motocyclette (1) selon l'une quelconque des revendications 1 à 18, dans lequel la partie bande de roulement (2) est divisée dans la direction de largeur du pneu en une région intérieure (IN) et une région extérieure (OUT) prenant

en sandwich la région intérieure (IN).

**20.** Pneu de motocyclette (1) selon la revendication 19, dans lequel la composition de caoutchouc constituant la région extérieure (OUT) de la partie bande de roulement (2) contient 25 % en masse ou moins de styrène dans le composé de caoutchouc et a une température de transition vitreuse (Tg) de -18 °C ou plus.

**21.** Pneu de motocyclette (1) selon l'une quelconque des revendications 1 à 20, dans lequel le rapport (Lm/Tw) entre la longueur maximale Lm (mm) de la couche de ceinture (7) dans la direction de largeur du pneu et la largeur de bande de roulement (Tw) (mm) est de 1,00 ou plus.

[FIG. 1]

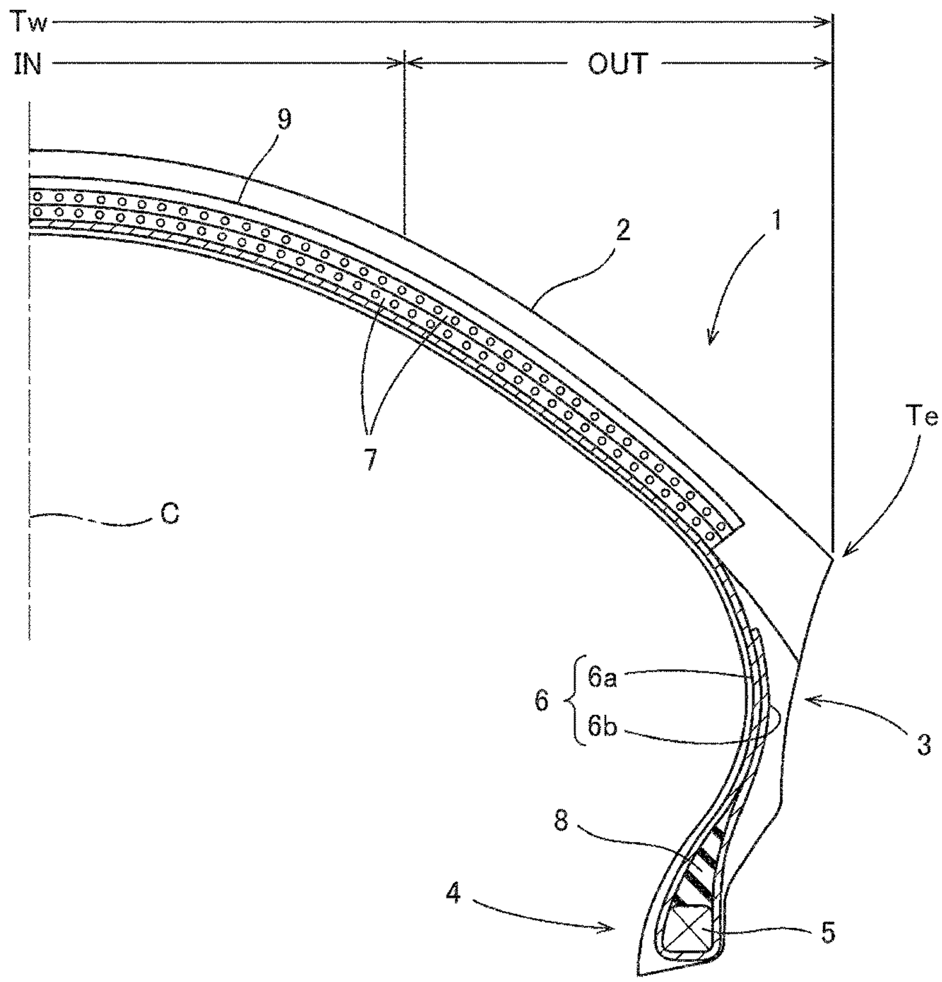


[FIG. 2]

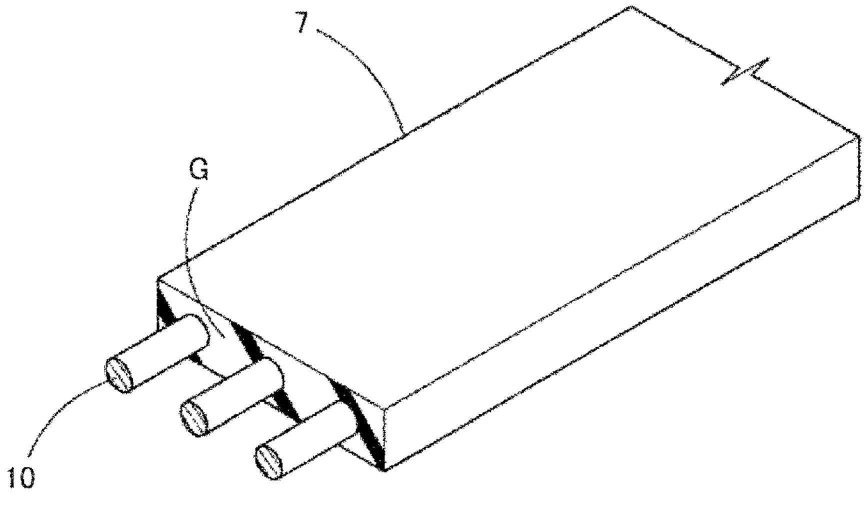

[FIG. 3]

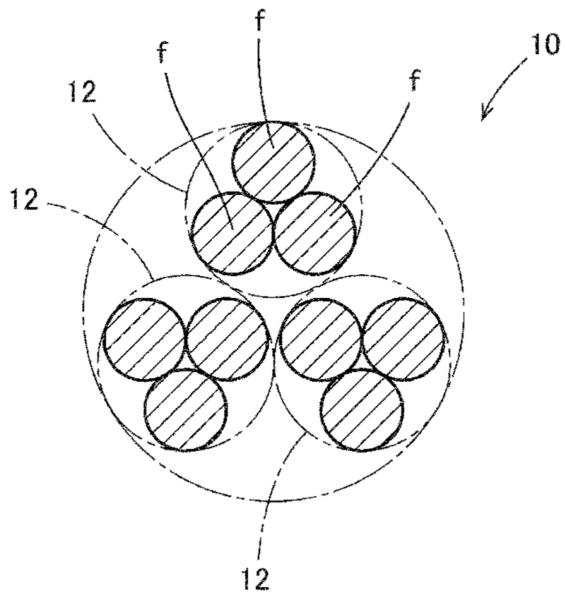


[FIG. 4]

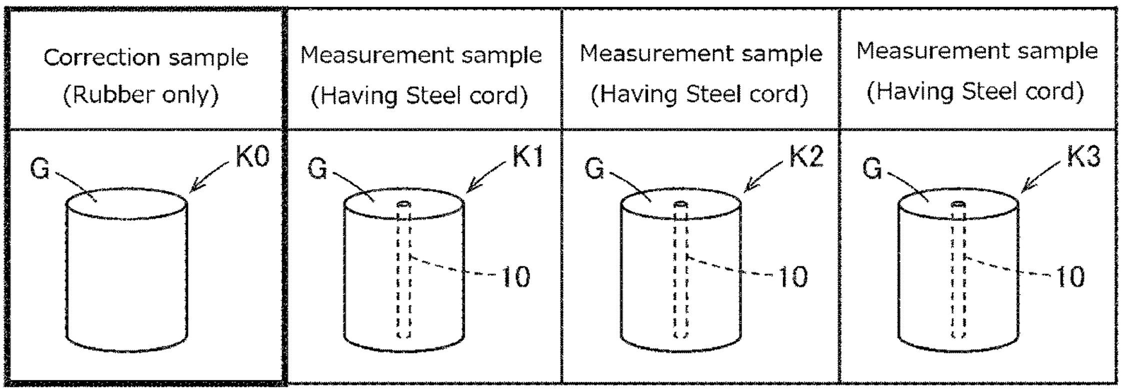


[FIG. 5]

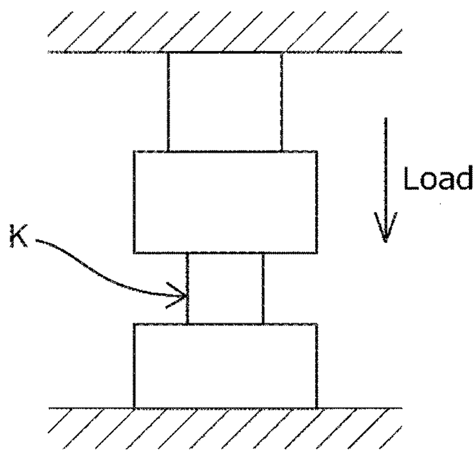

[FIG. 6]

| | K0 | K1 | K2 | K3 | |
|---|---|---|---|---|---|
| | 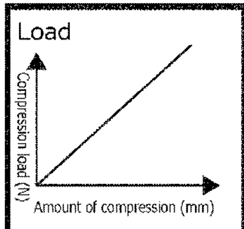 | 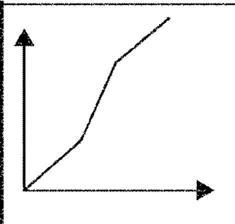 | 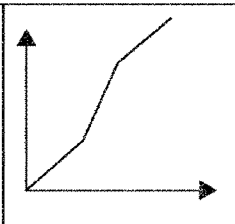 | 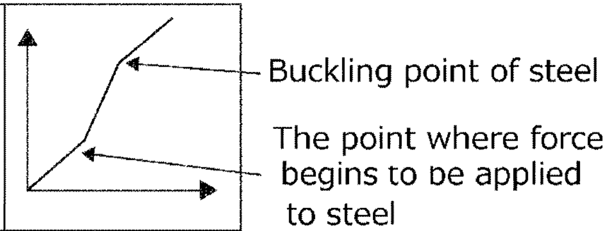 | |
| Maximum value of slope (N/mm) | 200 | 1200 | 1300 | 1500 | Average |
| Compressive rigidity of cord (N/mm) | — | 1000 | 1100 | 1300 | 1133 |

[FIG. 7]

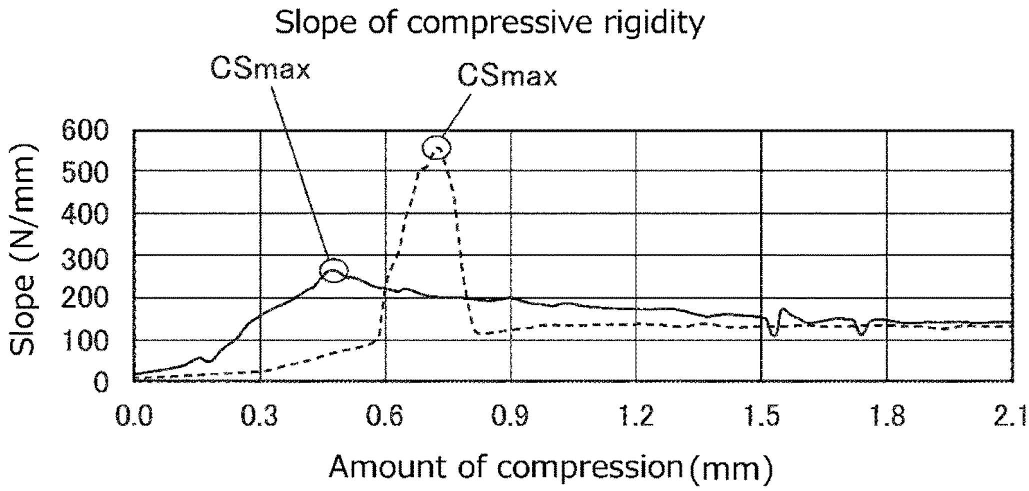
Slope of compressive rigidity
CSmax
CSmax
600
500
400
300
200
100
0
Slope (N/mm)
0.0
0.3
0.6
0.9
1.2
1.5
1.8
2.1
Amount of compression (mm)

[FIG. 8]

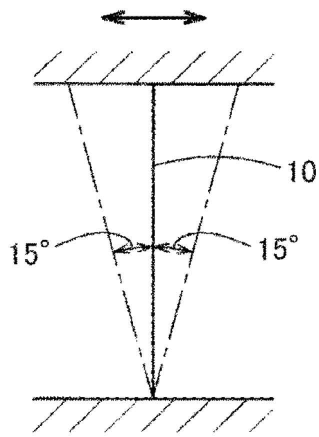
10
15°
15°

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6855699 B
- JP 2021130449 A
- JP 2014172548 A
- JP 6863000 B
- JP 2010111753 A
- US 4414370 B
- JP 59006207 A
- JP 5058805 B
- JP 1313522 A
- US 5010166 B


### Non-patent literature cited in the description


- *Toa Synthetic Research Annual Report TREND2000 No. 3*, 42-45